# EUROPEAN PATENT APPLICATION

(11) **EP 4 510 700 A1**
(43) Date of publication of application: **19.02.2025**
(21) Application number: 23787521.6
(22) Date of filing: 29.03.2023
(51) Int. Cl.: H04W 36/00, H04W 28/24

(54) **CARRIER SWITCHING METHOD AND APPARATUS, TERMINAL, AND NETWORK SIDE DEVICE**

(30) Priority: 11.04.2022 CN 202210377292
(71) Applicant: Datang Mobile Communications Equipment Co., Ltd., Beijing 100085 (CN)
(72) Inventor: WANG, Junwei, Beijing 100085 (CN)
(74) Representative: Studio Torta S.p.A.
(86) International application number: PCT/CN2023/084837
(87) International publication number: WO 2023/197875

(57) **Abstract**

The present disclosure provides a carrier switching method and apparatus, a terminal, and a network side device. The method includes: determining carriers involved in the switching from a first carrier set for transmitting before switching and a second carrier set for transmitting after the switching, carriers included in the first carrier set being different from carriers included in the second carrier set, and a quantity of antenna ports used by the carriers included in the first carrier set being different from a quantity of antenna ports used by the carriers included in the second carrier set; and during a carrier switching duration, a terminal skipping transmitting on the one or more carriers involved in the switching.

## Description

### CROSS-REFERENCE TO RELATED APPLICATION

This disclosure claims priority to Chinese Patent Application No. 202210377292.5 filed April 11, 2022 in China, the entire contents of which are hereby incorporated by reference.

### TECHNICAL FIELD

The present disclosure relates to the field of communications technologies, and in particular, to a carrier switching method and apparatus, a terminal, and a network side device.

### BACKGROUND

In the related art, uplink switching between two different carriers is supported; during carrier transmission, the terminal needs to terminate transmitting during carrier switching, that is, the switching time duration is needed, the value of the switching time duration depends on the implementation structure of the terminal, and the more devices shared among different carriers, the longer the switching time duration is, and vice versa.

The related technical solution only supports switching between two carriers of a terminal in two bands, and when the number of switched bands/carriers is increased to 3 or 4 or more, some new scenarios that cannot be covered by related art appear, because a carrier switching method in the related art cannot be completely applicable to a switching scenario of three or more carriers.

### SUMMARY

An objective of the present disclosure is to provide a carrier switching method and apparatus, a terminal, and a network side device, to resolve a problem that a related carrier switching method is not applicable to a scenario of switching three or more carriers.

A carrier switching method performed by a terminal is provided. The method includes: determining, from a first carrier set that transmits before switching and a second carrier set that transmits after the switching, one or more carriers involved in the switching, wherein a carrier included in the first carrier set is different from a carrier included in the second carrier set, and a quantity of antenna ports used by a carrier included in the first carrier set is different from a quantity of antenna ports used by a carrier included in the second carrier set; and during carrier switching, not transmitting on the one or more carriers involved in the switching.

Optionally, determining, from the first carrier set that transmits before the switching and the second carrier set that transmits after the switching, the one or more carriers involved in the switching includes: determining, as the one or more carriers involved in the switching, two carriers that use one antenna port to transmit and one carrier that uses two antenna ports to transmit; wherein the two carriers that use one antenna port to transmit are carriers in the same carrier set.

Optionally, determining, from the first carrier set that transmits before the switching and the second carrier set that transmits after the switching, the one or more carriers involved in the switching includes: in a case that each of different carriers included in the first carrier set uses one antenna port to transmit and a carrier included in the second carrier set uses two antenna ports to transmit, using two carriers included in the first carrier set as switched-from carriers involved in the switching, and using a carrier included in the second carrier set as a switched-to carrier involved in the switching.

Optionally, determining, from the first carrier set that transmits before the switching and the second carrier set that transmits after the switching, the one or more carriers involved in the switching includes: in a case that a carriers included in the first carrier set uses two antenna ports to transmit and each of different carriers included in the second carrier set uses one antenna port to transmit, using a carrier included in the first carrier set as a switched-from carrier involved in the switching, and using two carriers included in the second carrier set as switched-to carriers involved in the switching.

Optionally, the method further includes: determining, from the one or more carriers involved in the switching, a carrier switching location for performing the switching.

Optionally, determining, from the one or more carriers involved in the switching, the carrier switching location for performing the switching includes one of the following: determining the carrier switching location based on a first parameter of the one or more carriers involved in the switching; determining the carrier switching location from the one or more carriers involved in the switching based on configuration indication signaling.

Optionally, determining the carrier switching location based on the first parameter of the one or more carriers involved in the switching includes one of the following: if the first parameter of the carrier that uses the two antenna ports to transmit in the one or more carriers involved in the switching is a first value, determining that the carrier switching location is the carrier that uses the two antenna ports to transmit; if a first parameter of the carrier that uses one antenna port to transmit in the one or more carriers involved in the switching is a first value, determining that the carrier switching location is the carrier that uses one antenna port to transmit.

Optionally, the configuration indication signaling indicates one of the following: the carrier switching location is a carrier that uses one antenna port to transmit; the carrier switching location is a carrier that uses two antenna ports to transmit; an indication value corresponding to a carrier that uses two antenna ports to transmit.

Optionally, determining the carrier switching location from the one or more carriers involved in the switching based on configuration indication signaling includes: if an indication value corresponding to the carrier that uses the two antenna ports to transmit is a second value, determining that the carrier switching location is the carrier that uses the two antenna ports to transmit.

Optionally, the method further includes: determining switching start time of performing the switching.

Optionally, determining the switching start time of performing the switching includes one of the following: determining switching start time of each carrier that uses one antenna port to transmit in the one or more carriers involved in the switching; determining, based on an earliest switching time instant, switching start time of all carriers that use one antenna port to transmit in the one or more carriers involved in the switching.

Optionally, during carrier switching, not transmitting on the one or more carriers involved in the switching including: in a case that a switched-from carrier in the one or more carriers involved in the switching uses two antenna ports to transmit, determining, according to precoding matrix indication information of the antenna ports, a first antenna port with earlier switching start time in the two antenna ports; and during switching time duration of the first antenna port, not transmitting on a transmission channel corresponding to the first antenna port.

Optionally, the precoding matrix indication information indicates a weighting factor of each antenna port; determining, according to the precoding matrix indication information of the antenna ports, the first antenna port with the earlier switching start time in the two antenna ports includes: determining an antenna port having a weighting factor of a zero value as the first antenna port.

A carrier switching method performed by a network side device is provided. The method includes: determining one or more carriers involved in switching in a scheduled first carrier set that transmits before the switching and a scheduled second carrier set that transmits after the switching, wherein a carrier included in the first carrier set is different from a carrier included in the second carrier set, and a quantity of antenna ports used by a carrier included in the first carrier set is different from a quantity of antenna ports used by a carrier included in the second carrier set; during carrier switching, not receiving data on the one or more carriers involved in the switching.

Optionally, the determining the one or more carriers involved in the switching according to the scheduled first carrier set that transmits before the switching and the second carrier set that transmits after the switching includes: determining, as the one or more carriers involved in the switching, two carriers that each use one antenna port to transmit, and one carrier that uses two antenna ports to transmit; wherein the two carriers that each use one antenna port to transmit are carriers in the same carrier set.

Optionally, determining the one or more carriers involved in the switching in the scheduled first carrier set that transmits before the switching and the scheduled second carrier set that transmits after the switching includes: in a case that each of different carriers included in the first carrier set uses one antenna port to transmit and a carrier included in the second carrier set uses two antenna ports to transmit, using two carriers included in the first carrier set as switched-from carriers involved in the switching, and using a carrier included in the second carrier set as a switched-to carrier involved in the switching.

Optionally, determining the one or more carriers involved in the switching in the scheduled first carrier set that transmits before the switching and the scheduled second carrier set that transmits after the switching includes: in a case that a carriers included in the first carrier set uses two antenna ports to transmit and each of different carriers included in the second carrier set uses one antenna port to transmit, using a carrier included in the first carrier set as a switched-from carrier involved in the switching, and using two carriers included in the second carrier set as switched-to carriers involved in the switching.

Optionally, the method further includes: indicating, to the terminal, a carrier switching location for performing switching.

Optionally, indicating, to the terminal, the carrier switching location for performing switching comprises one of the following: indicating the carrier switching location by using a first parameter of the one or more carriers involved in the switching; and transmitting configuration indication signaling to the terminal, wherein the configuration indication signaling indicates the carrier switching location.

Optionally, the indicating the carrier switching location by using the first parameter of the one or more carriers involved in the switching includes one of the following: configuring, in the one or more carriers involved in the switching, a first parameter of a carrier that uses two antenna ports to transmit as a first value, wherein the first value is used to indicate that the carrier switching location is a carrier that uses two antenna ports to transmit; and configuring, in the one or more carriers involved in the switching, a first parameter of a carrier that uses one antenna port to transmit as a first value, and the first value is configured to indicate that the carrier switching location is a carrier that uses one antenna port to transmit.

Optionally, the configuration indication signaling indicates one of the following: the carrier switching location is a carrier that uses one antenna port to transmit; the carrier switching location is a carrier that uses two antenna ports to transmit; an indication value corresponding to a carrier that uses two antenna ports to transmit.

Optionally, that the configuration indication signaling indicates the carrier switching location includes: if an indication value corresponding to the carrier that uses the two antenna ports to transmit is a second value, determining that the carrier switching location is the carrier that uses the two antenna ports to transmit.

Optionally, the method further includes determining switching start time of performing the switching.

Optionally, determining the switching start time of performing the switching includes one of the following: determining switching start time of each carrier that uses one antenna port to transmit in the one or more carriers involved in the switching; determining, based on an earliest switching time instant, switching start time of all carriers that use one antenna port to transmit in the one or more carriers involved in the switching.

Optionally, not receiving data on the one or more carriers involved in the switching within the carrier switching time includes: in a case that a switched-from carrier in the one or more carriers involved in the switching uses two antenna ports to transmit, determining, according to precoding matrix indication information of the antenna ports, a first antenna port with earlier switching start time in the two antenna ports; and during switching time duration of the first antenna port, not receiving data on a transmission channel corresponding to the first antenna port.

Optionally, the precoding matrix indication information indicates a weighting factor of each antenna port; and the determining, according to precoding matrix indication information of the antenna ports, a first antenna port with earlier switching start time in the two antenna ports includes: determining an antenna port having a weighting factor of a zero value as the first antenna port.

A terminal is provided. The terminal includes: a memory, a transceiver, and a processor; wherein the memory is configured to store a computer program; the transceiver is configured to transmit and receive data under the control of the processor; and the processor is configured to read the computer program in the memory and perform the following operations: determining, from a first carrier set that transmits before switching and a second carrier set that transmits after the switching, one or more carriers involved in the switching, wherein a carrier included in the first carrier set is different from a carrier included in the second carrier set, and a quantity of antenna ports used by a carrier included in the first carrier set is different from a quantity of antenna ports used by a carrier included in the second carrier set; and during carrier switching, not transmitting on the one or more carriers involved in the switching.

Optionally, the processor is configured to read the computer program in the memory and perform the following operations: determining, as the one or more carriers involved in the switching, two carriers that use one antenna port to transmit and one carrier that uses two antenna ports to transmit; wherein the two carriers that use one antenna port to transmit are carriers in the same carrier set.

Optionally, the processor is configured to read the computer program in the memory and perform the following operations: in a case that each of different carriers included in the first carrier set uses one antenna port to transmit and a carrier included in the second carrier set uses two antenna ports to transmit, using two carriers included in the first carrier set as switched-from carriers involved in the switching, and using a carrier included in the second carrier set as a switched-to carrier involved in the switching.

Optionally, the processor is configured to read the computer program in the memory and perform the following operations: in a case that a carriers included in the first carrier set uses two antenna ports to transmit and each of different carriers included in the second carrier set uses one antenna port to transmit, using a carrier included in the first carrier set as a switched-from carrier involved in the switching, and using two carriers included in the second carrier set as switched-to carriers involved in the switching.

Optionally, the processor is configured to read the computer program in the memory and perform the following operations: determining, from the one or more carriers involved in the switching, a carrier switching location for performing the switching.

Optionally, the processor is configured to read the computer program in the memory and perform one of the following operations: determining the carrier switching location based on a first parameter of the one or more carriers involved in the switching; determining the carrier switching location from the one or more carriers involved in the switching based on configuration indication signaling.

Optionally, the processor is configured to read the computer program in the memory and perform one of the following operations: if the first parameter of the carrier that uses the two antenna ports to transmit in the one or more carriers involved in the switching is a first value, determining that the carrier switching location is the carrier that uses the two antenna ports to transmit; if a first parameter of the carrier that uses one antenna port to transmit in the one or more carriers involved in the switching is a first value, determining that the carrier switching location is the carrier that uses one antenna port to transmit.

Optionally, the configuration indication signaling indicates one of the following: the carrier switching location is a carrier that uses one antenna port to transmit; the carrier switching location is a carrier that uses two antenna ports to transmit; an indication value corresponding to a carrier that uses two antenna ports to transmit.

Optionally, the processor is configured to read the computer program in the memory and perform the following operations: if an indication value corresponding to the carrier that uses the two antenna ports to transmit is a second value, determining that the carrier switching location is the carrier that uses the two antenna ports to transmit.

Optionally the processor is configured to read the computer program in the memory and perform the following operations: determining switching start time of performing the switching.

Optionally, the processor is configured to read the computer program in the memory and perform one of the following operations: determining switching start time of each carrier that uses one antenna port to transmit in the one or more carriers involved in the switching; determining, based on an earliest switching time instant, switching start time of all carriers that use one antenna port to transmit in the one or more carriers involved in the switching.

Optionally, the processor is configured to read the computer program in the memory and perform the following operations: in a case that a switched-from carrier in the one or more carriers involved in the switching uses two antenna ports to transmit, determining, according to precoding matrix indication information of the antenna ports, a first antenna port with earlier switching start time in the two antenna ports; during switching time duration of the first antenna port, not transmitting on a transmission channel corresponding to the first antenna port.

Optionally the precoding matrix indication information indicates a weighting factor of each antenna port; the processor is configured to read the computer program in the memory and perform the following operations: determining an antenna port having a weighting factor of a zero value as the first antenna port.

A network side device is provided. The network side device includes: a memory, a transceiver, and a processor; wherein the memory is configured to store a computer program; the transceiver is configured to transmit and receive data under the control of the processor; and the processor is configured to read the computer program in the memory and perform the following operations: determining one or more carriers involved in switching in a scheduled first carrier set that transmits before the switching and a scheduled second carrier set that transmits after the switching, wherein a carrier included in the first carrier set is different from a carrier included in the second carrier set, and a quantity of antenna ports used by a carrier included in the first carrier set is different from a quantity of antenna ports used by a carrier included in the second carrier set; during carrier switching, not receiving data on the one or more carriers involved in the switching.

Optionally, the processor is configured to read the computer program in the memory and perform the following operations: determining, as the one or more carriers involved in the switching, two carriers that each use one antenna port to transmit and one carrier that uses two antenna ports to transmit; wherein the two carriers that use one antenna port to transmit are carriers in the same carrier set.

Optionally, the processor is configured to read the computer program in the memory and perform the following operations: in a case that each of different carriers included in the first carrier set uses one antenna port to transmit and a carrier included in the second carrier set uses two antenna ports to transmit, using two carriers included in the first carrier set as switched-from carriers involved in the switching, and using a carrier included in the second carrier set as a switched-to carrier involved in the switching.

Optionally, the processor is configured to read the computer program in the memory and perform the following operations: in a case that a carriers included in the first carrier set uses two antenna ports to transmit and each of different carriers included in the second carrier set uses one antenna port to transmit, using a carrier included in the first carrier set as a switched-from carrier involved in the switching, and using two carriers included in the second carrier set as switched-to carriers involved in the switching.

Optionally, the processor is configured to read the computer program in the memory and perform the following operations: indicating, to the terminal, a carrier switching location for performing switching.

Optionally, the processor is configured to read a computer program in the memory and perform one of the following operations: indicating the carrier switching location by using a first parameter of the one or more carriers involved in the switching; and transmitting configuration indication signaling to the terminal, wherein the configuration indication signaling indicates the carrier switching location.

Optionally, the processor is configured to read a computer program in the memory and perform one of the following operations: configuring, in the one or more carriers involved in the switching, a first parameter of a carrier that uses two antenna ports to transmit as a first value, wherein the first value is used to indicate that the carrier switching location is a carrier that uses two antenna ports to transmit; and configuring, in the one or more carriers involved in the switching, a first parameter of a carrier that uses one antenna port to transmit as a first value, and the first value is configured to indicate that the carrier switching location is a carrier that uses one antenna port to transmit.

Optionally, the configuration indication signaling indicates one of the following: the carrier switching location is a carrier that uses one antenna port to transmit; the carrier switching location is a carrier that uses two antenna ports to transmit; an indication value corresponding to a carrier that uses two antenna ports to transmit.

Optionally, the processor is configured to read the computer program in the memory and perform the following operations: if an indication value corresponding to the carrier that uses the two antenna ports to transmit is a second value, determining that the carrier switching location is the carrier that uses the two antenna ports to transmit.

Optionally, the processor is configured to read the computer program in the memory and perform the following operations: determining the switching start time of performing the switching.

Optionally, the processor is configured to read a computer program in the memory and perform one of the following operations: determining switching start time of each carrier that uses one antenna port to transmit in the one or more carriers involved in the switching; determining, based on an earliest switching time instant, switching start time of all carriers that use one antenna port to transmit in the one or more carriers involved in the switching.

Optionally, the processor is configured to read the computer program in the memory and perform the following operations: in a case that a switched-from carrier in the one or more carriers involved in the switching uses two antenna ports to transmit, determining, according to precoding matrix indication information of the antenna ports, a first antenna port with earlier switching start time in the two antenna ports; and during switching time duration of the first antenna port, not receiving data on a transmission channel corresponding to the first antenna port.

Optionally, the precoding matrix indication information indicates a weighting factor of each antenna port; and the processor is configured to read the computer program in the memory and perform the following operations: determining an antenna port having a weighting factor of a zero value as the first antenna port.

A carrier switching apparatus is provided. The apparatus includes: a first determining unit, configured to determine, from a first carrier set that transmits before switching and a second carrier set that transmits after the switching, one or more carriers involved in the switching, wherein a carrier included in the first carrier set is different from a carrier included in the second carrier set, and a quantity of antenna ports used by a carrier included in the first carrier set is different from a quantity of antenna ports used by a carrier included in the second carrier set; and a first processing unit configured to during carrier switching, not transmit on the one or more carriers involved in the switching.

A carrier switching apparatus is provided. The apparatus includes: a second determining unit, configured to determine one or more carriers involved in switching in a scheduled first carrier set that transmits before the switching and a scheduled second carrier set that transmits after the switching, wherein a carrier included in the first carrier set is different from a carrier included in the second carrier set, and a quantity of antenna ports used by a carrier included in the first carrier set is different from a quantity of antenna ports used by a carrier included in the second carrier set; a second processing unit, configured to during carrier switching, not receive data on the one or more carriers involved in the switching.

A computer-readable storage medium having a computer program stored thereon is provided. When the computer program is executed by a processor, the processor implements steps of the carrier switching methods described above.

The above technical solution of the present disclosure has the following beneficial effects. In this embodiment of the present application, a carrier that needs to be involved in switching is determined from a first carrier set that transmits before switching and a second carrier set that transmits after the switching, so that in a time duration of carrier switching, the terminal does not transmit any data on one or more carriers involved in the switching, to ensure an effective implementation of multi-band carrier switching. The number of antenna ports used by the carrier which transmits in the first carrier set is different from the number of antenna ports used by the carrier which transmits in the second carrier set, so as to implement switching between different numbers of transmission channels, and may be applied to a carrier switching process in 3 bands or more bands.

### BRIEF DESCRIPTION OF THE DRAWINGS

FIG. 1 shows a schematic diagram of switching between two carriers;
FIG. 2 shows a first schematic diagram of the time duration of carrier switching;
FIG. 3 shows a second schematic diagram of the time duration of carrier switching;
FIG. 4 shows a third schematic diagram of the time duration of carrier switching;
FIG. 5 is a schematic flowchart of a carrier switching method according to an embodiment of the present disclosure;
FIG. 6 shows a first carrier switching scenario according to an embodiment of the present disclosure;
FIG. 7 shows a second carrier switching scenario according to an embodiment of the present disclosure;
FIG. 8 is a schematic diagram of an indication of a precoding matrix according to an embodiment of the present disclosure;
FIG. 9 is a schematic diagram of transmitting by a terminal using a 2-antenna-port according to an embodiment of the present disclosure;
FIG. 10 is a second schematic flowchart of a carrier switching method according to an embodiment of the present disclosure;
FIG. 11 is a schematic structural diagram of a carrier switching apparatus according to an embodiment of the present disclosure;
FIG. 12 is a second schematic structural diagram of a carrier switching apparatus according to an embodiment of the present disclosure;
FIG. 13 is a structural block diagram of a terminal according to an embodiment of the present disclosure;
FIG. 14 is a structural block diagram of a network side device according to an embodiment of the present disclosure.

### DETAILED DESCRIPTION

In order to make the technical problems, technical solutions and advantages to be solved by the present disclosure clearer, the following describes in detail with reference to the accompanying drawings and specific embodiments. In the following description, specific details such as specific configurations and components are provided merely to facilitate a thorough understanding of embodiments of the present disclosure. Therefore, those skilled in the art should understand that various changes and modifications can be made to the embodiments described herein without departing from the scope and spirit of the present disclosure. In addition, descriptions of known functions and constructions are omitted for clarity and conciseness.

It should be understood that "one embodiment" or "an embodiment" mentioned throughout the specification means that a particular feature, structure, or characteristic related to the embodiment is included in at least one embodiment of the present disclosure. Therefore, "in one embodiment" or "in an embodiment" appearing throughout the specification does not necessarily refer to the same embodiment. Furthermore, the particular features, structures, or characteristics may be combined in any suitable manner in one or more embodiments.

In various embodiments of the present disclosure, it should be understood that the sequence numbers of the processes described below do not imply a sequence of execution, and the execution order of each process should be determined by its function and internal logic, and should not constitute any limitation on the implementation process of the embodiments of the present disclosure.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In this embodiment of the present application, the term "a plurality of" means two or more, and other quantifiers are similar to each other.

The following clearly and completely describes the technical solutions in the embodiments of the present application with reference to the accompanying drawings in the embodiments of the present application. All other embodiments obtained by a person of ordinary skill in the art based on the embodiments of the present application without creative efforts shall fall within the protection scope of the present application.

When performing the description of the embodiments of the present disclosure, some concepts used in the following description are first explained.
I. a carrier selective transmission/concurrent process on a multi-band is supported, wherein the main purpose is to enhance the radio coverage capability of a cell. For example:
   when the terminal is in the center of the cell and the terminal is closer to the base station, and the terminal communicates using a carrier within a band within a higher frequency (for example, Carrier-1 of 3.5GHz 2Tx MIMO, with a bandwidth of 100MHz), so that a higher data transmission rate can be obtained;
   when the terminal is in the center of the cell and the terminal is closer to the base station, the terminal communicates using a carrier of a band within a higher frequency (for example, Carrier-1 of 3.5GHz 2Tx MIMO, with a bandwidth of 100MHz), so that a higher data transmission rate can be obtained;
   when the terminal is closer to the center of the cell and the terminal is not too far away from the base station, the terminal can simultaneously use carriers of two bands (for example, Carrier-1 of 2.1GHz, Carrier-2 of 3.5GHz) for communication, so that spectrum resources can be fully utilized for improving user experience (Note: "Concurrent Uplink" mode).
II. a switching process between transmission carriers.

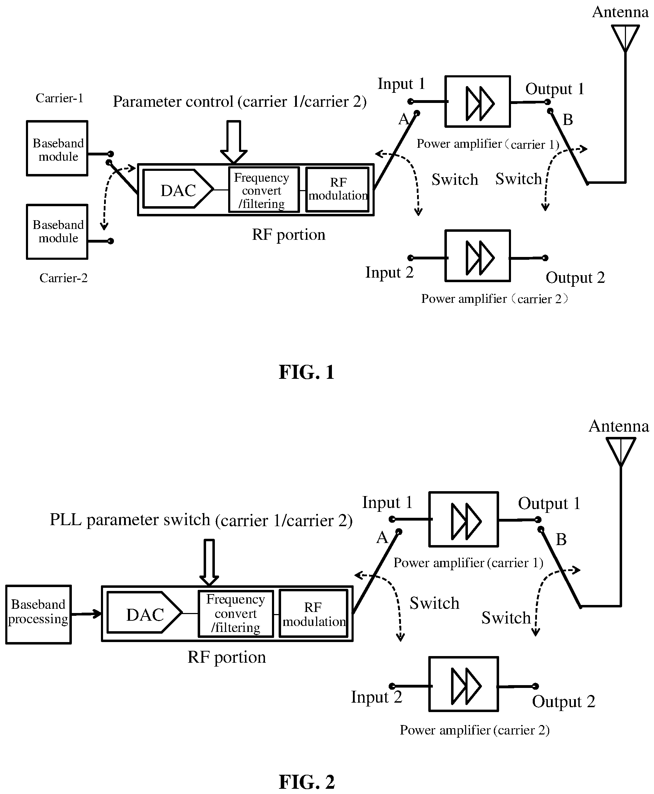

Considering the cost problem of the terminal, some devices are shared among different carriers, so that the manufacturing cost can be reduced, but the switching time duration and the switching location need to be considered. Uplink switching between carriers on two different bands is supported, and a simple terminal structure model and a switching process are shown in FIG. 1.

As shown in FIG. 1, in uplink communication of the terminal, inter-carrier switching may occur. When a signal or a channel is transmitted on the carrier 1, the control parameter of the radio frequency (RF) adopts a value related to the carrier 1, and the output point A of the RF is switched to the input poinT1 of the power amplifier of the carrier 1. Meanwhile, the power amplifier outpuT1 is switched to the antenna B. When a signal or a channel is transmitted on the carrier 2, the control parameter of the RF adopts a value related to carrier 2, and the output point A of the RF is switched to the input point 2 of the power amplifier of the carrier 2. Meanwhile, the power amplifier output 2 is switched to the antenna B.

### III. switching duration between transmission carriers:

When the switching of the carrier transmission, during carrier switching, the terminal needs to terminate transmission, that is, the switching time duration (SwitchingTime) is needed, and the switching time duration may be represented by time, such as {35 us, 140 us, 210 us}, or the number of symbols; for example, in the case of SCS = 30 kHz, the number of switching symbols is {1, 4, 6} symbols.

Further, the value of the switching time duration depends on the implementation structure of the terminal. That is, the more devices shared among different carriers, the longer the time needed to switch, and vice versa. As shown in FIG. 2, the terminal structure is that each of the power amplifiers (PA) of the carrier 1 and the carrier 2 is independent, and one set of RF device is shared, so that the time duration of carrier switching is mainly switching of a Phase Locked Loop (PLL) parameter and about 35 microseconds.

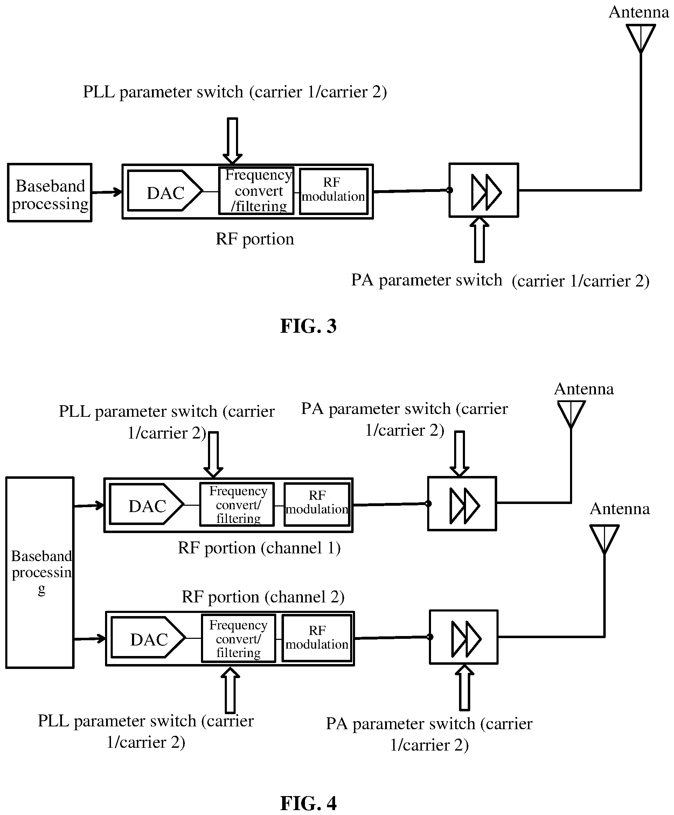

As shown in FIG. 3, the terminal structure is that: carrier 1 and carrier 2 share a set of PAs, and share a set of RF devices, so that the time duration of carrier switching is that PA parameter switching needs to be about 140 microseconds, PLL parameter switching needs to be about 35 microseconds, the maximum value between the PA parameter switching and the PLL parameter switching is taken, and the time length of carrier switching on the terminal is 140 microseconds.

FIG. 2 and FIG. 3 are switching (between 1Tx and 1Tx) between single channels (1Tx), and in an actual working process, switching between dual channels (switching between 2TX and 2TX) is also supported, and FIG. 4 illustrates a structure of switching between two channels. The terminal structure is: a set of RF devices of a channel 1 and a set of PA being shared by the carrier 1 and the carrier 2, a set of RF devices of a channel 2 and a set of PA being shared by the carrier 1 and the carrier 2; the time duration of carrier switching is that the PA parameter switching needs to be abouT140 microseconds, the PLL parameter switching needs to be about 35 microseconds, the maximum value of the PA parameter switching and the PA parameter switching is selected, that is, the time duration of the carrier switching of the terminal is abouT140 microseconds.

### IV. carrier switching between the two bands, and a "concurrent uplink" mode supports the following scenarios:

**TABLE 1. Two-Band "Concurrent Uplink" switching scenarios**

| | Number of Tx channels (c1 + c2) | | Number of antenna ports (c1+c2) | |
|---|---|---|---|---|
| Case 1 | | 1T+1T | | 1P+0P, 1P+1P, 0P+1P |
| Case 2 | | 0T+2T | | 0P+2P, 0P+1P |
| Case 3 | | 2T+0T | | 2P+0P, 1P+0P |

In Table 1, c1 represents carrier-1 on band-1; c2 represents carrier-2 on band-2;

0T represents transmission of 0 Tx channel (uplink transmission unit); 1T represents transmission of one Tx channel (uplink transmission unit), and so on;

0P represents transmission of 0 antenna port (not transmitting any information, but actually possibly being allocated with a Tx channel); 1P represents transmission of one antenna port (transmitting information, at least transmission of one Tx channel), and 2P represents transmission of two antenna ports (transmitting information and transmission of two Tx channels);

In Table 1, two carriers on two bands are defined, and C1/C2 and parameters in various cases are in one-to-one correspondence, for example, 0P +1P in Case -1 is taken as an example which indicates 1 TX channel (1T) is allocated on carrier-1, but no signal/data (0P) is sent; and indicates one Tx channel (1T) is allocated on carrier-2, and carrier-2 uses one port to transmit signal/data (1P).

The "concurrent uplink" mode refers to that the terminal can transmit signal/channel data on two carriers on two bands; for example, signal/channel data can be transmitted on carrier-1 of band-1, and signal/channel data is transmitted on carrier-2 of band-2.

The "switching uplink" mode refers to that the terminal can only transmit signal/channel data on a carrier (such as carrier-1) on one band (for example, band-1). When signal/channel data needs to be transmitted on a carrier (such as carrier-2) on another band (for example, band-2), transmission on band-1 needs to be stopped.

Specifically, an embodiment of the present disclosure provides a carrier switching method, which solves the problem that the related carrier switching method is not applicable to switching scenarios of three or more carriers.

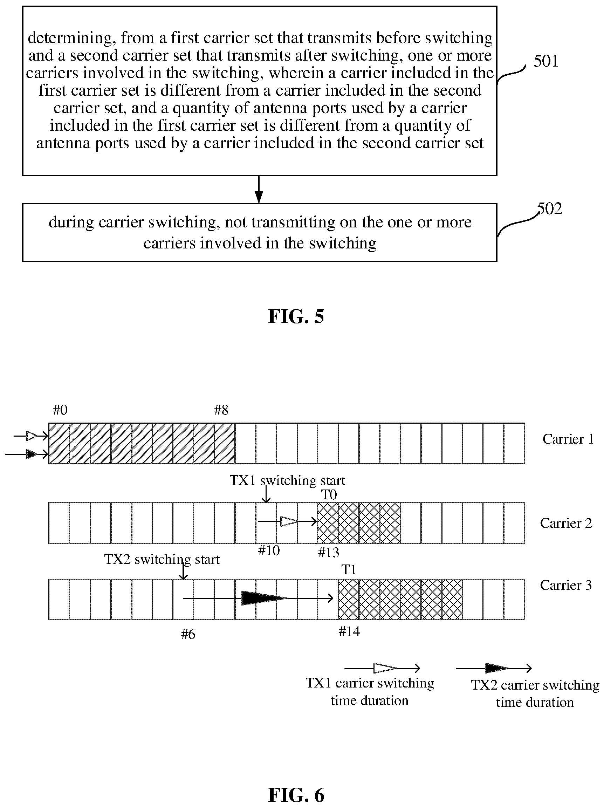

As shown in FIG. 5, an embodiment of the present disclosure provides a carrier switching method, which specifically includes the following steps:
Step 501: determine one or more carriers involved in the switching from a first carrier set that transmits before switching and a second carrier set that transmits after the switching, wherein a carrier included in the first carrier set is different from a carrier included in the second carrier set, and a quantity of antenna ports used by a carrier included in the first carrier set is different from a quantity of antenna ports used by a carrier included in the second carrier set.

In this embodiment, the network side device may schedule the terminal to transmit on a corresponding carrier, and if the carriers scheduled in two schedulings are different, the terminal may need to perform carrier switching. The first carrier set is a set of carriers used for transmitting before the terminal performs carrier switching, and the second carrier set is a set of carriers used for transmitting after the terminal performs carrier switching.

For example, before the first time instant, the terminal has transmitted on a carrier included in the first carrier set, and according to the scheduling signaling of the network side device, the terminal needs to transmit on the second carrier set at the first time instant, and then the terminal needs to switch the transmission channel from the first carrier set to the second carrier set, and transmit, and when the carrier in the first carrier set is switched to the carrier in the second carrier set, the time duration of carrier switching is required.

The first carrier set may include one or more carriers, the second carrier set may include one or more carriers, carriers included in the first carrier set do not overlap with carriers included in the second carrier set, and the number of antenna ports used by a carrier included in the first carrier set is different from the number of antenna ports used by a carrier included in the second carrier set, for example: the first carrier set includes a carrier 2 and a carrier 3, and the carrier 2 and the carrier 3 respectively use one antenna port to transmit; the second carrier set includes a carrier 1, the carrier 1 transmits by using two antenna ports, and the one or more carriers involved in the switching is: carrier 2 and carrier 3 are switched to carrier 1, or carrier 1 is switched to carrier 2 and carrier 3, switching of 1TX +1TX to 2TX or switching of 2TX to 1TX +1TX is achieved.

It should be noted that the first time instant when the terminal performs carrier switching may include a plurality of time instants, and the embodiments of the present application are only used to indicate a time instant when the terminal needs to transmit after performing the switching, for example, the terminal is about to transmit on the first carrier at the time instant T0, and is about to transmit on the second carrier at the time instant T1, and the time instant T0 and the time instant T1 are both the first time instant. A time instant before the first time instant is a time instant when the terminal receives the data scheduling signaling but has not yet transmitted.

Step 502: during carrier switching, the terminal does not transmit on the one or more carriers involved in the switching.

The time duration of carrier switching is a duration consumed for the terminal to switch from a carrier in the first carrier set to a carrier in the second carrier set. When carrier switching is performed, a transmission channel needs to be switched. Since carriers included in the first carrier set are different from carriers included in the second carrier set, the time duration of carrier switching is required during carrier switching. During carrier switching, on one or more carriers involved in the switching, the terminal does not transmit any data to ensure normal execution of carrier switching.

In this embodiment of the present application, a carrier that needs to be involved in switching is determined from a first carrier set that transmits before switching and a second carrier set that transmits after the switching, so that in a time duration of carrier switching, the terminal does not transmit any data on one or more carriers involved in the switching, to ensure an effective implementation of multi-band carrier switching. The number of antenna ports used by the carrier which transmits in the first carrier set is different from the number of antenna ports used by the carrier which transmits in the second carrier set, so as to implement switching between different numbers of transmission channels, and may be applied to a carrier switching process including 3 bands or more bands.

Optionally, a quantity of different carriers included in the first carrier set and the second carrier set is greater than or equal to 3.

For example, the first carrier set includes: a carrier 3, which transmits by using two antenna ports, wherein the second carrier set includes: a carrier 1 and a carrier 2, and the carrier 1 and the carrier 2 respectively transmit by using one antenna port, so that the carrier 1, the carrier 2, and the carrier 3 are three carriers that are different between the carrier sets, and the carrier 3 may be switched to the carrier 1 and the carrier 2, or the carrier 1 and the carrier 2 may be switched to the carrier 3.

Optionally, a quantity of bands corresponding to carriers included in the first carrier set and the second carrier set is greater than 2.

For example, in the first carrier set, a first carrier of a first band and a second carrier of a second band are included; the second carrier set includes a third carrier of a third band, and a quantity of bands included in the first carrier set and the second carrier set is three, that is, a first band, a second band, and a third band; For another example, in the first carrier set, the first carrier set includes a first carrier of a first band, the second carrier set includes a second carrier of a second band and a third carrier of a third band, and a quantity of bands included in the first carrier set and the second carrier set is three, that is, a first band, a second band, and a third band.

In this embodiment, the sum of the numbers of the bands corresponding to the carriers included in the first carrier set and the second carrier set is greater than 2 (or greater than or equal to 3), so that it can be ensured that the carrier switching method in this embodiment of the present application is applicable to a carrier switching process involving 3 bands or more bands.

In an optional embodiment, the determining one or more carriers involved in the switching from a first carrier set for transmitting before switching and a second carrier set for transmitting after the switching includes:
determining, as the one or more carriers involved in the switching, two carriers that use one antenna port to transmit respectively, and one carrier that uses two antenna ports to transmit; and the two carriers that use one antenna port to transmit are carriers in the same carrier set.

In this embodiment, in a case that carriers included in one of the first carrier set and the second carrier set respectively use one antenna port to transmit, and a carrier included in another carrier set of the first carrier set and the second carrier set uses two antenna ports to transmit, two carriers that use one antenna port to transmit and one carrier that uses two antenna ports to transmit may be determined as the one or more carriers involved in the switching.

For a case that the numbers of antenna ports used by each carrier before carrier switching and after carrier switching are different, that is, the terminal uses one transmission channel on each carrier before switching to transmit, and after the switching, two transmission channels are used on the carrier to transmit, or before the switching, two transmission channels are used on the carrier to transmit, and after the switching, one transmission channel is used on each carrier to transmit, and two carriers used for transmitting by using one antenna port (i.e., using one transmission channel) and one carrier used for transmitting by using two antenna ports (that is, using two transmission channels) are determined as one or more carriers involved in the switching.

For example: the first carrier set includes: the carrier 1 and the carrier 3 both using one antenna port to transmit, the second carrier set includes a carrier 2, the carrier 2 uses two antenna ports for transmitting, it can be determined that the carrier 1 and the carrier 3 are switched to the carrier 2, the one or more carriers involved in the switching are a carrier 1, a carrier 3 and a carrier 2, or the first carrier set includes: a carrier 1 which transmits by using two antenna ports, the second carrier set includes a carrier 2 and a carrier 3, the carrier 2 and the carrier 3 respectively use one antenna port to transmit, and it may be determined that the carrier 1 is switched to the carrier 2 and the carrier 3.

Using the switching between the three bands as an example, the carrier switching situation in the terminal supporting the "concurrent uplink" mode is shown in Table 2:

**Table 2: "Concurrent Uplink" mode (3 bands and 3 carriers)**

| Scene | number of Tx channels (c1 + c2+c3) | Number of antenna ports (c1+c2+c3) |
|---|---|---|
| Case 1 | 0T+1T+1T | A1={0P+0P+1P},A2={0P+1P+0P},A3={0P+1P+1P} |
| Case 2 | 1T+0T+1T | A1={0P+0P+1P},A4={1P+0P+0P},A5={1P+0P+1P} |
| Case 3 | 1T+1T+0T | A2={0P+1P+0P},A4={1P+0P+0P},A6={1P+1P+0P} |
| Case 4 | 0T+0T+2T | B1={0P+0P+2P},A1={0P+0P+1P} |
| Case 5 | 0T+2T+0T | B2={0P+2P+0P},A2={0P+1P+0P} |
| Case 6 | 2T+0T+0T | B4={2P+0P+0P},Ad={1P+0P+0P} |

In Table 2, c1 represents carrier-1 on band-1; c2 represents carrier-2 on band-2; c3 represents carrier-3 on band-3;
0T represents transmission of 0 transmission channel (an uplink transmission unit; 1T represents transmission of one transmission channel (an uplink transmission unit), 2T represents transmission of two transmission channels, and so on;
0P represents transmission of 0 antenna port (not transmitting any information, but actually possibly being allocated with a Tx channel, but which is not used), 1P represents transmission of one antenna port (transmitting information, at least transmission of one Tx channel), and 2P represents transmission of two antenna ports (transmitting information, at least transmission of two Tx channels);

In the three carriers in the three bands in Table 2, the parameters in c1/c2/c3 are in one-to-one correspondence with the parameters in various cases. Using A1 = {0P +0P +1P} in case-1 as an example:
A1 indicates that no Tx channel (0T) is allocated on carrier-1, and no signal/data (0P) is transmitted;
One Tx channel (1T) is allocated on Carrier-2, but Carrier-2 does not transmit any signal/data (0P);

It indicates that one Tx channel (1T) is allocated on carrier -3, and carrier -3 uses one port to transmit signal/data (0P).
In Table 2, c1 represents carrier-1 on band-1; c2 represents carrier-2 on band-2; c3 represents carrier -3 on band -3;
0T represents transmission of 0 transmission channel (uplink transmission unit; 1T represents transmission of one transmission channel), 2T represents transmission of 2 transmission channels, and so on;
0P represents transmission of 0 antenna port (not transmitting any information, but actually possibly being allocated with a Tx channel, but which is not used), 1P represents transmission of one antenna port (transmitting information, at least transmission of one Tx channel), and 2P represents transmission of two antenna ports (transmitting information, at least transmission of two Tx channels);

In the three carriers in the three bands in Table 2, the parameters in c1/c2/c3 are in one-to-one correspondence with the parameters in various cases. Using A1 = {0P +0P +1P} in Case - 1 as an example:
A1 indicates that no Tx channel (0T) is allocated on carrier-1, and no signal/data (0P) is transmitted;
one Tx channel (1T) is allocated on Carrier-2, but Carrier-2 does not transmit any signal/data (0P);
one Tx channel (1T) is allocated on carrier -3 , and carrier -3 uses one port to transmit signal/data (0P).

Using the switching among the four bands as an example, the carrier switching situation included in the terminal supporting the "concurrent uplink" mode is shown in Table 3:

**Table 3: "Concurrent Uplink" mode (4 bands and 4 carriers)**

| Scene | Number of Tx channels (c1+c2+c3+c4) | Number of antenna ports (c1+c2+c3+c4) |
|---|---|---|
| Case 1 | 0T+0T+1T+1T | A1={0P+0P+0P+1P},A2={0P+0P+1P+0P}, A3={0P+0P+1P+1P} |
| Case 2 | 0T+1T+0T+1T | A1={0P+0P+0P+1P},A4={0P+1P+0P+0P}, A5={0P+1P+0P+1P} |
| Case 3 | 0T+1T+1T+0T | A2={0P+0P+1P+0P},A4={0P+1P+0P+0P}, A6={0P+1P+1P+0P} |
| Case 4 | 1T+1T+0T+0T | A4={0P+1P+0P+0P},A8={1P+0P+0P+0P}, A12={1P+1P+0P+0P} |
| Case 5 | 1T+0T+1T+0T | A2={0P+0P+1P+0P},A8={1P+0P+0P+0P}, A10={1P+0P+1P+0P} |
| Case 6 | 1T+0T+0T+1T | A1={0P+0P+0P+1P},A8={1P+0P+0P+0P}, A9={1P+0P+0P+1P} |
| Case 7 | 0T+0T+0T+2T | B1={0P+0P+0P+2P},A1={0P+0P+0P+1P} |
| Case 8 | 0T+0T+2T+0T | B2={0P+0P+2P+0P},A2={0P+0P+1P+0P} |
| Case 9 | 0T+2T+0T+0T | B4={0P+2P+0P+0P},A4={OP+1P+0P+0P} |
| Case10 | 2T+0T+0T+0T | B8={2P+0P+0P+0P},A8={1P+0P+0P+0P} |

The meaning of each parameter in Table 3 is similar to the meaning of the parameter of 3 bands and 3 carriers in Table 2, and details are not described herein again. For example, A5 = {0P +1P +0P +1P}: the A5 indicates that no Tx channel (0T) is allocated on carrier-1, and no signal/data (0P) is sent; one Tx channel (1T) is allocated on Carrier-2, and Carrier-2 uses one port to transmit signal/data (1P); no Tx channel (0T) is allocated on carrier -3 while no signal/data (0P) is transmitted; one Tx channel (1T) is allocated on Carrier-4, and carrier-2 uses one port to transmit signal/data (1P).

For the switching among the 3 bands and 3 carriers in Table 2 and the switching among the 4 bands and 4 carriers in Table 3, there may be multiple switching scenarios, and carriers involved in the switching in different switching scenarios may also be different.

The following describes a process of determining, by a terminal of the present application, one or more carriers involved in the switching according to a specific embodiment.

In an optional embodiment, the determining one or more carriers involved in the switching from a first carrier set for transmitting before switching and a second carrier set for transmitting after the switching includes:
in a case that different carriers included in the first carrier set respectively use one antenna port to transmit and carriers included in the second carrier set use two antenna ports to transmit, using two carriers included in the first carrier set as switched-from carriers involved in the switching, and using one carrier included in the second carrier set as a switched-to carrier involved in the switching.

In this embodiment, the first carrier set is a carrier before switching, and the second carrier set is a carrier after the switching, that is, the embodiment switches from two carriers using one antenna port to one carrier using two antenna ports, the two carriers using one antenna port are used as the switched-from carriers of the switching, and the one carrier using the two antenna ports is used as the switched-to carrier of the switching.

For example, if the second carrier set includes the first carrier in the first band, the first carrier set includes the second carrier in the second band and the third carrier in the third band, and the network side or the higher layer signaling configures the first carrier to transmit by using two antenna ports, that is, the first carrier occupies two transmission channels to transmit; and the second carrier and the third carrier respectively use one antenna port to transmit, that is, the second carrier and the third carrier respectively occupy one transmission channel to transmit. It may be determined that the terminal performs carrier switching, that is, a carrier set (carrier 2, carrier 3) needs to be switched to a carrier set (carrier 1), and when carrier switching is performed, carrier 2 and carrier 3 are switched to carrier 1. During the switching time duration of switching the carrier 1 and the carrier 3 to the carrier 1, the terminal does not transmit any data on the carrier 1, the carrier 2, and the carrier 3.

In this embodiment, when the terminal is ready to perform 2-port transmission on the first band and the first carrier, and if the previous transmission is that 1-port transmission is performed on the second carrier in the second band, and 1-port transmission is performed on the third band in the third carrier. Then, on the first carrier and the second carrier and the third carrier, the terminal does not want to transmit any data during SwitchingTime.

Using 3 bands and 3 carriers as an example, for a 3-band carrier switching scenario, referring to Table 2, it is assumed that a carrier before switching is different from a carrier after the switching, a scenario in which carrier switching needs to be performed is as follows:
1) Switching between case 1-A3 and case 6-B4; that is, carrier 2 and carrier 3 are switched to carrier 1, and 1Tx +1Tx is switched to 2Tx;
2) Switching between case 2-A5 and case 5-B2; that is, carrier 1 and carrier 3 are switched to carrier 2, and 1Tx +1Tx is switched to 2Tx;
3) Switching between case 3-A6 and case 4-B1; that is, carrier 1 and carrier 2 are switched to carrier 3, and 1TX +1TX is switched to 2TX.

Optionally, when the dynamic signaling scheduling or higher-layer signaling configuration of the network side device is implemented, a time instant at which the terminal transmits on each carrier may be indicated.

Using A6 to switch to B1 as an example, the process of switching from A6 to B1 includes:
Step 1: the terminal determines, according to the scheduling signaling 1 or the higher layer configuration message 1, that the information is transmitted on the carrier c3 of the third band at the time T0 by using the 2 antenna ports;
Step 2: the terminal determines, according to the scheduling signaling 2 or the high-layer information 2, that before the time instant T0, if the terminal uses the "1 antenna port A" to transmit information on the carrier c1 of the first band and transmits the information on the "1 antenna port B" on the carrier c2 in the second band at the same time;
Step 3: the terminal uses the Tx channels (two Tx channels) of the antenna ports A and B to transmit information on the carrier c3 in the third band. At the same time, when the two Tx channels are switched to the carrier c3, the terminal does not transmit information on any carrier involved in Tx channel switching (including c1, c2, c3). The information in this embodiment may include any signal or channel.

It should be noted that 1Tx is on c1 and c2, Tx channel switching may be started separately (i.e. determining the switching start time respectively), and Tx channel switching may also be started at the same time (i.e. determining the common switching start time of the two channels).

In an optional embodiment, the determining one or more carriers involved in the switching from a first carrier set for transmitting before switching and a second carrier set for transmitting after the switching includes:
in a case that carriers included in the first carrier set use two antenna ports to transmit and different carriers included in the second carrier set respectively use one antenna port to transmit, using one carrier included in the first carrier set as a switched-from carrier involved in the switching, and using two carriers included in the second carrier set as switched-to carriers involved in the switching.

In this embodiment, the first carrier set is a carrier set before switching, and the second carrier set is a carrier set after switching, that is, the embodiment switches from one carrier using two antenna ports to two carriers using one antenna port, the one carrier using two antenna ports is used as the switched-from carrier, and the two carriers using one antenna port are used as the switched-to carriers for switching.

For example, if the second carrier set includes the first carrier in the first band and the second carrier in the second band, the first carrier set includes the third carrier in the third band, and the network-side dynamic scheduling signaling or the higher-layer signaling configures the third carrier to transmit by using two antenna ports, that is, the third carrier occupies two transmission channels to transmit; and the first carrier and the second carrier respectively use one antenna port to transmit, that is, the first carrier and the second carrier respectively occupy one transmission channel to transmit. It may be determined that the terminal performs carrier switching, that is, it is necessary to switch from a carrier set (carrier 3) to a carrier set (carrier 1, carrier 2), and when carrier switching is performed, a transmission channel for carrier 3 is switched to carrier 1 and carrier 2 During the switching time duration in which the carrier 3 is switched to the carrier 1 and the carrier 2, the terminal does not transmit any data on the carrier 1, the carrier 2, and the carrier 3.

In this embodiment, when the terminal is ready to perform 1-port transmission on the first-band on the first carrier and perform 1-port transmission on the second-band on the second carrier, and if the previous transmission is that 2-port transmission is performed on the third band on the third carrier, then, on the first carrier and the second carrier and the third carrier, the terminal does not want to transmit any information during SwitchingTime.

Optionally, when the dynamic signaling scheduling or the higher layer signaling configuration of the network side device is implemented, a time instant at which the terminal transmits on each carrier may be indicated.

Using B1 being switched to A6 as an example, the process of the terminal switching from B1 to A6 includes:
Step 1: the terminal determines, according to the scheduling signaling 1 or/and the scheduling signaling 2 or the higher layer configuration message 1 or/and the higher layer configuration message 2, that 1 antenna port is used to transmit information on the carrier c1 of the first band at the time instant T0; and at the time instant T1, 1 antenna port is used to transmit information on the carrier c2 of the second band;
Step 2: the terminal determines, according to the scheduling signaling 2 or the high-layer information 2, that before the time T0, the terminal transmits information through 2 antenna ports ("the antenna port A and the antenna port B") on the carrier c3 in the third band.
Step 3: the terminal may transmit information on the carrier c1 in the first band by using the Tx channel of the antenna port A; and transmit information on the carrier c2 in the second band by using the Tx channel of the antenna port B. The terminal does not transmit information (including c1, c2, c3) on any carrier involved in Tx channel switching.

It should be noted that, in the switching from a 2TX carrier to two 1TX carriers, the Tx channel switching may be started separately (that is, the switching start time of each channel is determined respectively), or the Tx channel switching processes may be started at the same time (i.e. determining the common switching start time of the two channels).

In an optional embodiment, the method further includes: determining, from the one or more carriers involved in the switching, a carrier switching location for performing the switching.

Optionally, before the terminal does not transmit on the one or more carriers involved in the switching within a time duration of carrier switching, the terminal determines, from the one or more carriers involved in the switching, a carrier switching location for performing the switching.

Further optionally, the terminal determines a switching carrier pair for performing the switching from the one or more carriers involved in the switching, and determines a carrier switching location for each switching carrier pair.

In this embodiment, the carrier switching location refers to which carrier performs a carrier switching process. For example, when the carrier 1 (for example, the corresponding antenna port is P1) and the carrier 2 (for example, the corresponding antenna port is P2) that respectively transmit by using the 1 antenna port are switched to the carrier 3 (for example, the corresponding antenna ports are P31 and P32) that transmit by using the 2 antenna ports, the switching process for switching from the carrier 1 to the carrier 3 may be performed on the carrier 1, or may be performed on the carrier 3; for the switching from the carrier 2 to the carrier 3, the switching process may be performed on the carrier 2, or may be performed on the carrier 3. Based on the above example, a carrier pair (carrier 1, carrier 3; corresponding port may be p1, p31) and a carrier pair (carrier 2, carrier 3; corresponding port may be p2, p32) for performing the switching are determined; further for each switching carrier pair, the carrier switching location is determined, that is, the carrier switching location is determined for (carrier 1, carrier 3; the corresponding port may be P1, P31); for (carrier 2, carrier 3; the corresponding port may be P2, P32), the carrier switching location is determined.

Using carrier 1 being switched to carrier 3 as an example: if the data gap between carrier 1 and carrier 3 is less than the switching time duration of switching from carrier 1 to carrier 3, then when the switching process is performed on carrier 1, it is necessary to break part of data transmission on carrier 1, and when the switching process is performed on carrier 3, it is necessary to break part of data transmission on carrier 3.

In this embodiment, if the data gap of the two carriers performing the switching is greater than the time duration of carrier switching, then whether the carrier switching location is located at the switched-from carrier or the switched-to carrier does not affect data transmission. If the data gap of the two carriers performing the switching is less than the time duration of carrier switching, then the carrier switching location may affect the data transmission of the carrier where the carrier switching location is located.

Optionally, the determining, from the one or more carriers involved in the switching, a carrier switching location for performing the switching includes:
in the case that the data gap of the two carriers involved in the switching is less than the time duration of carrier switching;
if the switched-from carrier is two carriers that respectively use one antenna port to transmit, the switched-to carrier is one carrier that uses two antenna ports to transmit, and determining that when carrier switching is performed, transmission data on a transmission channel of the switched-from carrier is broken; or when the switched-from carrier is switched to the switched-to carrier, the data transmission of the target transmission channel on the switched-to carrier is broken; and the target transmission channel is a transmission channel corresponding to the switched-from carrier after the switched-from carrier is switched to the switched-to carrier;
   or,
if the switched-from carrier is one carrier that uses two antenna ports to transmit, the switched-to carrier is two carriers that use one antenna port to transmit respectively, then determining that when carrier switching is performed, data transmission on a target transmission channel of the switched-from carrier is broken; or data transmission of the transmission channel of the switched-to carrier is broken, wherein the target transmission channel is a transmission channel, on the switched-from carrier, that needs to be switched onto the switched-to carrier.

The following detailed description is given by way of example.

For example, the switched-from carrier is a carrier 1 and a carrier 2 that respectively transmit by using one antenna port, the switched-to carrier after the switching is a carrier 3, and the carrier 3 uses two antenna ports to transmit. Assuming that carrier 1 transmits using an antenna port A (also denoted as transmission channel A), carrier 2 transmits using an antenna port B (also denoted as transmission channel B), and after carrier switching, carrier 3 transmits using antenna port A and antenna port B. That is, during carrier switching, the transmission channel A on the carrier 1 is switched to the carrier 3, and the transmission channel B on the carrier 2 is switched to the carrier 3.

When the carrier switching location is determined, the carrier 1 is switched to the carrier 3, and if determining that the carrier switching location is the carrier 1, then when the carrier switching is started, even if data on the carrier 1 is not transmitted, the data transmission on the carrier 1 is still broken, and the transmission channel A is switched onto the carrier 3 and the to-be-transmitted data of the carrier 3 is transmitted through the transmission channel A; if determining that the carrier switching location is the carrier 3, then the carrier switching is started after the data transmission on the carrier 1 is completed, and even if the data transmission start time corresponding to the transmission channel A on the carrier 3 has been reached in the carrier switching process, the data transmission of the transmission channel A on the carrier 3 is not performed.

For the carrier 2 being switched to the carrier 3, if determining that the carrier switching location is the carrier 2, then when the carrier switching is started, even if the data on the carrier 2 is not transmitted, the data transmission on the carrier 2 is still broken, and the transmission channel B is switched to the carrier 3 and the to-be-transmitted data of the carrier 3 is transmitted through the transmission channel B; if determining that the carrier switching location is the carrier 3, then the carrier switching is started after the data transmission on the carrier 2 is completed, and even if the data transmission start time corresponding to the transmission channel B on the carrier 3 has been reached in the carrier switching process, the data transmission on the transmission channel B on carrier 3 is not performed.

For another example: the switched-from carrier is the carrier 3 which uses two transmitting ports (the transmission port A and the transmission port B, which may also be recorded as: the transmission channel A and the transmission channel B) to transmit; the switched-to carriers are the carrier 1 and the carrier 2 which respectively use one antenna port to transmit. Then after the carrier switching, the carrier 1 may use the antenna port A (or the antenna port B) to transmit, and the carrier 2 may use the antenna port B (or the antenna port A), that is, during carrier switching, the transmission channel A (or the antenna port B) on the carrier 3 is switched onto the carrier 1, and the transmission channel B (or the antenna port A) on the carrier 3 is switched onto the carrier 2.

In case that the carrier 3 is switched to the carrier 1, when the carrier switching location is determined, if determining that the carrier switching location is the carrier 3, and the transmission channel A of the carrier 3 is switched to the carrier 1, then when the carrier switching starts, even if the data transmission on the carrier 3 is not completed by the transmission channel A, the data transmission on the transmission channel A is still broken, and the transmission channel A is switched to the carrier 1 and the to-be-transmitted data of the carrier 1 is transmitted through the transmission channel A; if determining that the carrier switching location is the carrier 2, then the carrier switching is performed after the data transmission on the carrier 3 is completed by the transmission channel A, even if the data transmission start time of the carrier 1 has been reached in the carrier switching process, the data transmission of the transmission channel A on the carrier 1 is not performed.

In case that the carrier 3 is switched to the carrier 2, then when the carrier switching location is determined, if determining that the carrier switching location is the carrier 3 and the transmission channel B of the carrier 3 is switched to the carrier 2, even if the data on the carrier 3 is not transmitted by the transmission channel B, the data transmission on the transmission channel B is still broken, and the transmission channel B is switched to the carrier 2 and the to-be-transmitted data of the carrier 2 is transmitted through the transmission channel B; if determining that the carrier switching location is the carrier 2, the carrier switching is performed after the data transmission on the carrier 3 is completed by the transmission channel B, even if the data transmission start time of the carrier 2 has been reached in the carrier switching process, the data transmission of the transmission channel B on the carrier 2 is not performed.

Optionally, the determining, from the one or more carriers involved in the switching, a carrier switching location for performing the switching includes one of the following:
manner 1: determining the carrier switching location based on a first parameter of the one or more carriers involved in the switching; the first parameter may be a carrier parameter configured by the network side device for each carrier. In this embodiment, the specific switching location is indicated by using the first parameter;
manner 2: determining the carrier switching location from the one or more carriers involved in the switching based on the configuration indication signaling; the configuration indication signaling is, for example, higher layer signaling, and the network side device indicates a carrier switching location by using higher layer signaling.

Optionally, for manner 1, the determining the carrier switching location based on the first parameter of the one or more carriers involved in the switching includes one of the following:
1) if the first parameter of the carrier that uses the two antenna ports to transmit in the one or more carriers involved in the switching is the first value, determining that the carrier switching location is the carrier that uses the two antenna ports to transmit. The first value is, for example, "TRUE", that is, when a carrier parameter of a carrier that uses two antenna ports to transmit is configured as "TRUE", it is considered that carrier switching is performed on a carrier that transmits on the two antenna ports; and when a carrier parameter of a carrier that uses two antenna ports to transmit is configured as "FALSE", it is considered that carrier switching is not performed on a carrier that transmits on the two antenna ports.
2) if the first parameter of the carrier that uses one antenna port to transmit in the one or more carriers involved in the switching is the first value (which may be that the first parameter of any one of the two carriers is the first value), determining that the carrier switching location is the carrier that uses the one antenna port to transmit. The first value is, for example, "TRUE", that is, in two carriers that use one antenna port to transmit, when a carrier parameter of any carrier is configured as "TRUE", it is considered that carrier switching is performed on a carrier that transmits on the one antenna port; and when carrier parameters of all carriers of two carriers that use one antenna port to transmit are configured as "FALSE", it is considered that carrier switching is not performed on a carrier that transmits on the one antenna port.
3) if the first parameter of the carrier that uses one antenna port to transmit in the one or more carriers involved in the switching is the second value (the first parameter of any one of the two carriers is the second value), determining that the carrier switching location is the carrier that uses the two antenna ports to transmit. The second value is, for example, "FALSE", that is, in two carriers that use one antenna port to transmit, when a carrier parameter of any carrier is configured as "FALSE", it is considered that carrier switching is not performed on a carrier that transmits on the one antenna port; and when carrier parameters of all carriers of two carriers that use one antenna port to transmit are configured as "TRUE", it is considered that carrier switching is performed on a carrier that transmits on the one antenna port.

The first parameter may be "uplinkTxSwitchingPeriodLocation", and in this embodiment, a carrier switching location is determined based on an uplinkTxSwitchingPeriodLocation indication of 2TX; or a carrier switching location may be determined based on an uplinkTxSwitchingPeriodLocation indication of 1TX.

In an example in which the carrier switching location is determined based on the uplinkTxSwitchingPeriodLocation indication of 2TX, if the parameter uplinkTxSwitchingPeriodLocation of the carrier transmitting using the 2 ports is configured as TRUE, then the carrier switching location is the carrier that transmits using the 2 ports, otherwise, the carrier that transmits using the 1 port, and in this case, the configuration parameter condition of the carrier transmitting using the 1 port may not be considered.

Using the carrier switching scenario in which A3 is switched to B4 as an example, the Table 4 is listed below:

| Table 4: carrier switching scenario of 1Tx +1Tx being switched to 2 TX. scene | Number of Tx channels (c1 + c2+c3) | Number of antenna ports (c1+c2+c3) |
|---|---|---|
| Case 1 | 0T+1T+1T | A1={0P+0P+1P},A2={0P+1P+0P},A3={0P+1P+1P} |
| Case 6 | 2T+0T+0T | B4={2P+0P+0P},Ad={1P+0P+0P} |

The switching scenario in Table 4 is: c2 and c3 that transmit by using one antenna port are switched to c1 that transmits by using the two antenna ports.

For the foregoing Table 4, the network side device configures the first parameters of the 3 carriers of the three bands, wherein each carrier may be configured separately, as shown in Table 5, or each carrier pair may be separately configured, as shown in Table 6.

| Table 5: carrier switching location configuration items and results (based on a single carrier configuration) Carrier information | Carrier switching location information (uplinkTxSwitchingPeriodLocation) | Note |
|---|---|---|
| Carrier-1 | TRUE | Carrier switching is performed on carrier-1 |
| Carrier-2 | FALSE | Carrier switching is not performed on carrier-2 |
| Carrier-3 | TRUE | Carrier switching is performed on carrier -3 |

When c2 and c3 that transmit using one antenna port are switched to c1 that transmits using two antenna ports, in Table 5, c1 is configured to be TRUE and transmits using 2 ports; c2 and c3 transmit using 1 port; when carrier switching is performed, the switching location is c1.

**Table 6: carrier switching location configuration terms and results (configuration based on carrier switching pair)**

| Carrier switching pair | Carrier switching location information (uplinkTxSwitchingPeriodLocation) | Note |
|---|---|---|
| c1, c2 | TRUE, FALSE | Carrier switching is performed on c1 |
| c1, c3 | FALSE, TRUE | Carrier switching is performed on c3 |
| c2, c3 | FALSE, TRUE | Carrier switching is performed on c3 |

When c2 and c3 that transmit using one antenna port are switched to c1 that transmits using two antenna ports, and in Table 6, in the carrier switching pair {c1, c2}, c1 is configured to be TRUE; in the carrier switching pair {c1, c3}, c1 is configured as FALSE; c1 uses 2 ports for transmission and is configured to be TRUE; c2 and c3 use 1 port for transmission: when carrier switching is performed, the switching location is c1

It should be noted that, in this embodiment of the present application, that the carrier switching is performed on carrier-1 means that when the data gap GAP of the two carriers is less than the switching time duration, it is necessary to break a part of data transmission on carrier-1, and carrier switching on other carriers is similar to this, and details are not described herein again.

Optionally, the carrier switching location is determined based on a first parameter of a carrier that uses two antenna ports to transmit, and the carrier switching location may be determined based on a first parameter of a carrier that uses one antenna port to transmit; or, as long as an uplinkTxSwitchingPeriodLocation of one carrier that transmits using one antenna port is configured as TRUE, the carrier switching is performed on a carrier that transmits using one antenna port; or as long as an uplinkTxSwitchingPeriodLocation of one carrier that transmits using one antenna port is configured as FALSE, the carrier switching is not performed on the carrier that uses the 1 antenna port to transmit.

Optionally, for the manner 2, the configuration indication signaling indicates one of the following:
a) the carrier switching location is a carrier that uses one antenna port to transmit;
b) the carrier switching location is a carrier that transmits by using two antenna ports;
c) an indication value corresponding to the carrier that transmits using two antenna ports.

In this embodiment, for the above a) and b), the network side device directly indicates, by using the configuration indication signaling, whether the carrier switching location is a carrier that transmits using the 1 antenna port or a carrier that transmits using the 2 antenna ports. Using three bands and three carriers as an example, as shown in Table 7.

**Table 7: Carrier switching location configuration item and result (three bands and three carriers).**

| Carrier using 2 ports | Carrier using 2 ports | Carrier location information (uplinkTxSwitchingPeriodLocation) | Note |
|---|---|---|---|
| C1 | C2,C3 | Location_1P | Carrier switching is performed on c2 and c3 |
| C2 | C1,C3 | Location_2P | Carrier switching is performed on c2 |
| C3 | C1,C2 | Location_2P | Carrier switching is performed on C3 |

That the carrier switching is performed on c1 means that when the data gap GAPO of the two carriers is less than the switching time duration, it is necessary to break the data transmission on c1, and the carrier switching performed on other carriers is similar, which will not be repeated here.

For the above "c)", the network side device configures, in the configuration indication signaling, an indication value corresponding to a carrier that uses two antenna ports to transmit, wherein the indication value may be a Boolean indication value. In this embodiment, when the Boolean type indicates the switching location, the Boolean indication value corresponding to the carrier that transmits by using two antenna ports may be configured, for example:
Uplink transmission switching configuration (UplinkTxSwitching) { Switching location (uplinkTxSwitchingPeriodLocation) BOOLEAN, Switching location 2 (uplinkTxSwitchingPeriodLocation2) BOOLEAN, Configure a carrier to which a cell belongs (uplinkTxSwitchingCarrier-r16) ENUMERATED {carrier1, carrier2, carrie3, carrier4} }

In the foregoing configuration information, the switching location 2 is configuration information newly added to indicate a Boolean indication value corresponding to a carrier that uses two antenna ports to transmit. For example, a carrier switching scenario of the foregoing switching configuration 2 (uplinkTxSwitchingPeriodLocation2) of the Boolean type is: switching between a first carrier in a first band that uses two antenna ports to transmit, and a second carrier in a second band and a third carrier in a third band that use one antenna port to transmit. Other switching scenarios may use the indication information of a Boolean-type switching location (uplinkTxSwitchingPeriodLocation).

The configuration information of the switching location 2 of the Boolean type may be set to 0 or 1, for example, the configuration 1 is switching in the local cell, and the configuration 0 is not switching in the local cell.

Further, the determining the carrier switching location from the one or more carriers involved in the switching based on the configuration indication signaling may include: if the indication value corresponding to the carrier that uses the two antenna ports to transmit is the second value, determining that the carrier switching location is the carrier that uses the two antenna ports to transmit.

The second value may be set according to requirements, and is configured to indicate that the carrier switching location is a carrier that uses two antenna ports to transmit, for example, the second value may be set to 1, or may be set to TRUE.

In an optional embodiment, the method further includes: determining a switching start time when performing the switching.

Since the number of antenna ports used by the carrier before switching is different from the number of antenna ports used by the carrier after the switching, the switching start time of the transmission channel on each carrier needs to be determined when carrier switching is performed.

Optionally, determining the switching start time of performing the switching includes one of the following:
(1) determine the switching start time of each carrier, in one or more carriers involved in the switching, that transmits by using one antenna port.

In this embodiment, for each carrier that uses one antenna port to transmit, the respective switching start time is determined, for example, the terminal switches from c1 using two antenna ports to c2 and c3 using one antenna port, and the terminal may determine the switching start time of switching from c1 to c2 and the switching start time of switching from c1 to c3, respectively. For another example, the terminal switches from c2 and c3 using one antenna port to c1 using two antenna ports, and the terminal may determine the switching start time of c2 and c3, respectively.

(2) determining, based on the earliest switching time instant, a switching start time of all carriers that use one antenna port to transmit in the one or more carriers involved in the switching.

In this embodiment, the terminal determines the common switching start time for all switching carriers, and determines the common switching start time as the earliest switching start time of all carriers. For example, the terminal switches from c1 using two antenna ports to c2 and c3 using one antenna port, and the terminal may first determine the switching start time T1 of switching from c1 to c2 and the switching start time T2 of switching from c1 to c3, and if T1 is earlier than T2, it may be determined that the switching start time of switching from c1 to c2 and c3 is T1.

In the following, two manners of determining the carrier switching start time in the foregoing manners (1) and (2) are respectively illustrated, wherein the switching start time is the time instant when the switching is started, taking a switching scenario of switching from B4 {2P +0P +0P} to the A3 {0P +1P +1P} as an example, that is, c1 that transmits using 2 antenna ports is switched to c2 and c3 that use 1 antenna port to transmit, and it is assumed that:
1. starting points of transmission information of two carriers in different bands after the switching are different (for example, a transmission start symbol of c2 is a time instant T0, and a transmission start symbol of c3 is a time instant T1).
2. the switching duration (SwitchingTime) of the two carriers is different. (For example, the duration of switching from c1 to c2 is: SwitchingTime0 = 3 symbols, for example, the duration of switching from c1 to c3 is: SwitchingTime1 = 8 symbols).
3. In the case of 2TX transmission, the carrier switching location (uplinkTxSwitchingPeriodLocation) is configured on c1.

The process of determining the switching start time of the carrier is described below by using (manner (1)) as an example that the switching start time of each carrier is independently determined, as shown in FIG. 6.

For Carrier 2 (C2):
SwitchingTime0 = 3, that is, the switching time duration of switching from c1 to c2 is 3 symbols;
T0 = 13, that is, the start time of the information to be transmitted on c2 is the symbol 13 (the location of the first symbol of the information to be transmitted);

GAPO = 4 symbols of transmitting information on c1 and c2, that is, greater than SwitchingTime 0, then, the terminal performs Tx channel switching from c1 to c2 on the symbol location # 10.

For carrier 3 (C3):
SwitchingTime0 = 8, that is, the switching time duration of switching from c1 to carrier -3 is 8 symbols.
T0 = 14, that is, the start time of the information to be transmitted on c3 is the symbol 14 (the location of the first symbol of the information to be transmitted);

GAPO = 5 symbols of transmitting information on c1 and c3, that is, less than SwitchingTime1, then the terminal performs Tx channel switching from c1 to c3 on symbol location # 6.

According to the foregoing content, the switching start time of switching c1 to c2 is the symbol location # 10, the switching start time of switching c1 to c3 is the symbol location # 6, and the two Tx channels on c1 may respectively perform the switching process at the corresponding location according to the switching start time. If the common switching start time of all carriers is determined based on the earliest switching time instant, it may be determined that the switching start time of switching c1 to c2 and c3 is the symbol location # 6, that is, the two Tx channels on c1 are switched at the same time at the symbol location # 6.

According to the above content, since there are one Tx channel starting to perform switching on the symbol 6 (switching to C3), then on c1, from the symbol 6 on, Tx 2 cannot transmit in the two Tx channels, and thus c1 starts at symbol 6, and both two channels stop data transmission after the symbol 6.

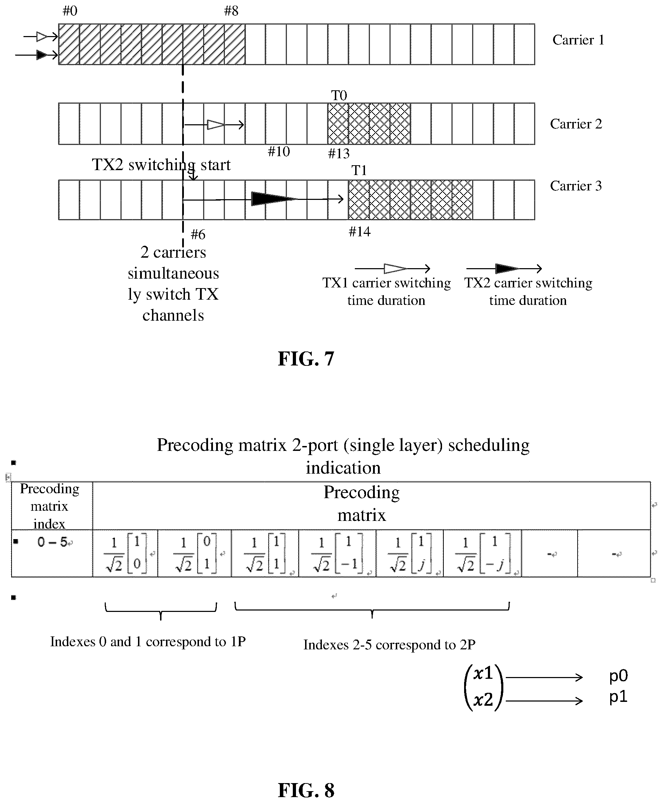

The process of determining the switching start time of the carrier is described below by using (manner (2)) as an example that the common switching start time of two carriers is determined, as shown in FIG. 7.

Step 1: determine the transmission switching time of c2 (according to SwitchingTime0 and T0): SwitchingTime0 = 3, that is, the switching time duration of switching from c1 to c2 is 3 symbols.
T0 = 13, that is, the start time of the information to be transmitted from c2 is the symbol 13 (the location of the first symbol of the information to be transmitted);

GAPO = 4 symbols of transmitting information on c1 and c2, that is, greater than SwitchingTime 0. That is, the terminal performs Tx channel switching from c1 to c2 on the symbol location # 10.

Step 2: determine the transmission switching time of c3 (according to SwitchingTime1 and T1): SwitchingTime0 = 8, that is, the switching time duration from c1 to c3 is 8 symbols.
T0 = 14, that is, the start time of the information to be transmitted from c3 is the symbol 14 (the location of the first symbol of the information to be transmitted);

GAPO = 5 symbols of transmitting information on c1 and c3, that is, less than SwitchingTime 1, then the terminal performs Tx channel switching from c1 to c3 on the symbol location # 6.

Step 3: according to the switching start time of Step 1/Step 2, the time with the minimum value (the earliest switching start time) is the switching start time of the two carriers, that is, the symbol # 6 as shown in FIG. 7.

According to the foregoing content, since the two Tx channels start to perform switching (switched to c2 and c3) on the symbol 6, the two Tx channels stop data transmission starting from the symbol 6 on c1.

Optionally, when the switching start time of the two transmission channels are different, when one transmission channel starts to switch, the other transmission channel may also not stop transmitting.

Optionally, during carrier switching, not transmitting on the one or more carriers involved in the switching by the terminal includes:
in a case that a switched-from carrier in the one or more carriers involved in the switching uses two antenna ports to transmit, a first antenna port with an earlier switching start time among the two antenna ports is determined according to precoding matrix indicator (PMI) indication information of the antenna ports; and within the switching time duration of the first antenna port, not transmitting on a transmission channel corresponding to the first antenna port by the terminal. Optionally, the terminal may not transmit only on a transmission channel corresponding to the first antenna port. In this embodiment, that the network side device indicates that the two antenna ports are used to transmit information is implemented by using the precoding matrix indication. When the switching start times of the two transmission channels are different, the terminal may determine, based on the precoding matrix information, a transmission channel (that is, an antenna port) that starts to switch first, and when the switching transmission channel which starts the switching first is switched, data may not be transmitted only on the transmission channel, and the other transmission channel may continue to transmit. For example, c1 that transmits by using two antenna ports (including the antenna port A and the antenna port B) is switched to c2 and c3 that each uses one antenna port to transmit, and if the switching start time of the antenna port A is earlier than the switching start time of the antenna port B, then when the antenna port A is switched, the terminal does not transmit on the transmission channel A corresponding to the antenna port A, data may be continuously transmitted on the transmission channel B corresponding to the antenna port B, so that even if one antenna port is switched, data transmission of another antenna port on the carrier is not affected.

Optionally, the precoding matrix indication information indicates a weighting factor of each antenna port; and determining, based on the precoding matrix indication information of the antenna port, a first antenna port with the earlier switching start time in the two antenna ports includes: determining an antenna port with the weighting factor of a zero value as the first antenna port.

In this embodiment, the precoding matrix is configured to weight the transmitted signals of different antenna ports, and when the weighting factor is 0, it is equivalent to that the antenna port is 0-power transmission. The antenna port with the weighting factor of 0 value is preferentially switched, because the transmit power on the antenna port is 0, even if the break will not affect the data transmission.

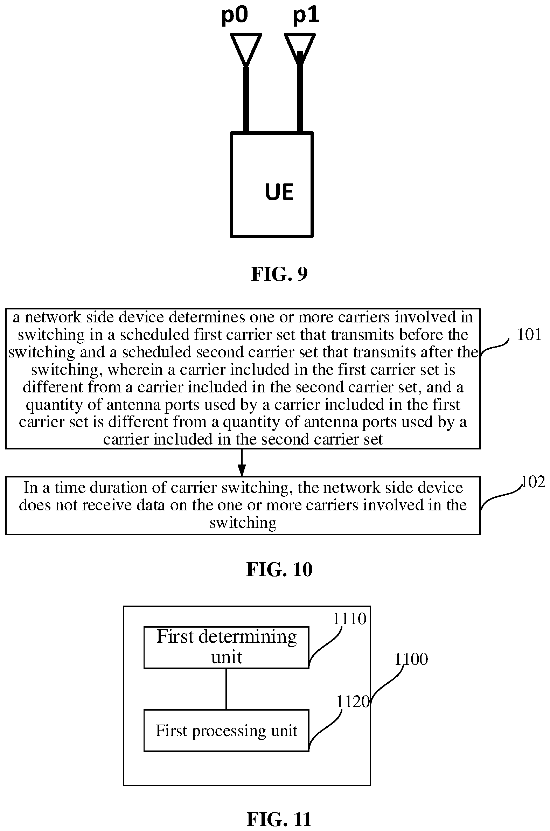

Scheduling indication to the two antenna ports by the precoding matrix is shown in FIG. 8 and FIG. 9. When the precoding matrix indication information (Transmitted Precoding Matrix Indicator, TPMI) of the antenna port is indicated as 0 (the index is 0), because the weighting factor of the port P1 is 0, it indicates that the UE transmits a signal on the antenna port 0 (P0), does not transmit a signal on P1, or a signal transmit power on the port P1 is 0;

When the TPMI indication is 1 (the index is 1), since the weighting factor of the port P0 is 0, it indicates that the UE transmits a signal on the antenna port 1 (P1), the signal is not transmitted at P0, or the signal transmit power of the port P0 is 0.

When c1 that transmits using two antenna ports (including the antenna port A and the antenna port B) is switched to c2 and c3 that each use one antenna port to transmit, that is, when c1 scheduled to use two ports for transmission (occupying 2 TX channels) is switched to 1TX of c2 and 1TX of c3, and when the scheduling indication c1 is transmission with a single layer and 2 ports and the TPMI indication is 0 or 1, although 1 TX starts the carrier switching at the symbol 6, since the transmission power of the Tx is 0, the data transmission of c1 is actually not affected, the data transmission of c1 may not be broken in the case of specific precoding.

The present application solves the problem of how to determine a carrier switching scenario, determine a carrier switching location, and determine a time duration of carrier switching when more than two carriers are switched therebetween, thereby facilitating efficient execution of a 3-band or 4-band uplink carrier switching characteristic.

In this embodiment of the present application, a carrier that needs to be involved in switching is determined from a first carrier set that transmits before switching and a second carrier set that transmits after the switching, so that in a time duration of carrier switching, the terminal does not transmit any data on one or more carriers involved in the switching, to ensure an effective implementation of multi-band carrier switching. The number of antenna ports used by the carrier which transmits in the first carrier set is different from the number of antenna ports used by the carrier which transmits in the second carrier set, so as to implement switching between different numbers of transmission channels, and may be applied to a carrier switching process in 3 bands or more bands.

As shown in FIG. 10, an embodiment of the present application further provides a carrier switching method, applied to a network side device. The carrier switching method includes:
Step 101: a network side device determines one or more carriers involved in switching in a scheduled first carrier set that transmits before the switching and a scheduled second carrier set that transmits after the switching, wherein a carrier included in the first carrier set is different from a carrier included in the second carrier set, and a quantity of antenna ports used by a carrier included in the first carrier set is different from a quantity of antenna ports used by a carrier included in the second carrier set.

In this embodiment, the first part of carriers is a carrier which is to be switched at the first time instant and is scheduled by the network side device, and the second part of carrier may be a carrier which has been scheduled by the network side device and used by the terminal to transmit. Before the first time instant, the network side device has scheduled the terminal to transmit on the second part of carriers, and if the network side device schedules the terminal to transmit on the first part of carriers at the first time instant, the terminal needs to switch the second part of carriers to the first part of carriers and transmit, and when the second part of carriers is switched to the first part of carriers, the time duration of carrier switching is required.

The first carrier set may include one or more carriers, the second carrier set may include one or more carriers, carriers included in the first carrier set are not same as carriers included in the second carrier set, and the number of antenna ports used by a carrier included in the first carrier set is different from the number of antenna ports used by a carrier included in the second carrier set, for example: the first carrier set includes a carrier 2 and a carrier 3, and the carrier 2 and the carrier 3 each uses one antenna port to transmit; the second carrier set includes a carrier 1, the carrier 1 transmits by using two antenna ports, and the one or more carriers involved in the switching are carrier 2 and carrier 3 which are switched to carrier 1, or are carrier 1 which is switched to carrier 2 and carrier 3. Switching of 1TX +1TX to 2TX or switching of 2TX to 1TX +1TX is achieved.

Step 102: in a time duration of carrier switching, the network side device does not receive data on the one or more carriers involved in the switching.

The time duration of carrier switching is a duration in which a terminal switches from a carrier in the first carrier set to a carrier in a second carrier set. When carrier switching is performed, a transmission channel needs to be switched. Since carriers included in the first carrier set are different from carriers included in the second carrier set, the time duration of carrier switching is required during carrier switching. Within a time duration of carrier switching, on one or more carriers involved in the switching, the terminal does not transmit any data, so that the network side device does not receive any data, to ensure normal execution of carrier switching.

In this embodiment of the present application, the carrier that needs to be involved in the switching is determined from the first carrier set that transmits before the switching and the second carrier set that transmits after the switching, so that the network side device does not receive any data on the one or more carriers involved in the switching during carrier switching, which can ensure that the multi-band carrier switching is effectively performed, and can save signaling overheads. The number of antenna ports used by the carrier which transmits in the first carrier set is different from the number of antenna ports used by the carrier which transmits in the second carrier set, so as to implement switching between different numbers of transmission channels, and may be applied to a carrier switching process in 3 or more bands.

Optionally, a quantity of different carriers included in the first carrier set and the second carrier set is greater than or equal to 3.

For example, the first carrier set includes: a carrier 3, which transmits by using two antenna ports, and the second carrier set includes: a carrier 1 and a carrier 2, and the carrier 1 and the carrier 2 each transmit by using one antenna port, so that the carrier 1, the carrier 2, and the carrier 3 are three carriers that are different between the carrier sets, and the carrier 3 may be switched to the carrier 1 and the carrier 2, or the carrier 1 and the carrier 2 may be switched to the carrier 3.

Optionally, a quantity of bands corresponding to carriers included in the first carrier set and the second carrier set is greater than 2 or is larger or equal to 3.

Optionally, the determining the one or more carriers involved in the switching according to the scheduled first carrier set that transmits before the switching and the second carrier set that transmits after the switching includes:
determining, as the one or more carriers involved in the switching, two carriers that each use one antenna port to transmit, and one carrier that uses two antenna ports to transmit; wherein the two carriers that each use one antenna port to transmit are carriers in the same carrier set.

In this embodiment, in case that the numbers of antenna ports used in various carriers before and after carrier switching of the terminal are different, that is, the terminal occupies one transmission channel on each carrier before switching to transmit, and two transmission channels are used to transmit on the carrier after the switching; or two transmission channels are used before switching to transmit on the carriers, and one transmission channel is used to transmit on each carrier after the switching, and two carriers which transmit by using one transmission channel (i.e., using one transmission channel) and 1 carrier which transmits by using two antenna port (that is, using two transmission channels) are determined as one or more carriers involved in the switching.

For example: the first carrier set includes: the carrier 1 and the carrier 3 each of which uses one antenna port to transmit, the second carrier set includes a carrier 2, the carrier 2 uses two antenna ports for transmitting, it can be determined that the carrier 1 and the carrier 3 are switched to the carrier 2, the one or more carriers involved in the switching are a carrier 1, a carrier 3 and a carrier 2, or the first carrier set includes: a carrier 1 which transmits by using two antenna ports, the second carrier set includes a carrier 2 and a carrier 3, the carrier 2 and the carrier 3 each use one antenna port to transmit, and it may be determined that the carrier 1 is switched to the carrier 2 and the carrier 3.

Using the switching between the three bands as an example, the carrier switching situation in the terminal supporting the "concurrent uplink" mode is shown in Table 2; using the switching among the four bands as an example, the carrier switching situation included in the terminal supporting the "concurrent uplink" mode is shown in Table 3, and details are not described herein again.

In an optional embodiment, the determining one or more carriers involved in the switching from a first carrier set for transmitting before switching and a second carrier set for transmitting after the switching includes:
in a case that different carriers included in the first carrier set each use one antenna port to transmit and carriers included in the second carrier set use two antenna ports to transmit, using two carriers included in the first carrier set as switched-from carriers involved in the switching, and using one carrier included in the second carrier set as a switched-to carrier involved in the switching.

In this embodiment, the first carrier set is a carrier before switching, and the second carrier set is a carrier after the switching, that is, the embodiment switches from two carriers using one antenna port to one carrier using two antenna ports, the two carriers using one antenna port are used as the switched-from carriers of the switching, and the one carrier using the two antenna ports is used as the switched-to carrier of the switching.

For example, if the second carrier set includes the first carrier in the first band, the first carrier set includes the second carrier in the second band and the third carrier in the third band, and the network side or the higher layer signaling configures the first carrier to transmit by using two antenna ports, that is, the first carrier occupies two transmission channels to transmit; and the second carrier and the third carrier each use one antenna port to transmit, that is, the second carrier and the third carrier each occupy one transmission channel to transmit. It may be determined that the terminal performs carrier switching, that is, a carrier set (carrier 2, carrier 3) needs to be switched to a carrier set (carrier 1), and when carrier switching is performed, carrier 2 and carrier 3 are switched to carrier 1. During the switching time duration of switching from the carrier 2 and the carrier 3 to the carrier 1, the terminal does not transmit any data on the carrier 1, the carrier 2, and the carrier 3.

In this embodiment, when the network side device schedules the terminal to prepare to perform 2-port transmission on the first band and the first carrier, and if the previous transmission is that 1-port transmission is performed on the second carrier in the second band, and 1-port transmission is performed on the third band in the third carrier. Then, on the first carrier and the second carrier and the third carrier, the terminal does not want to transmit any data during SwitchingTime, and the network side device does not receive any data during SwitchingTime.

In an optional embodiment, the determining one or more carriers involved in the switching from a scheduled first carrier set for transmitting before switching and a scheduled second carrier set for transmitting after the switching includes:
in a case that carriers included in the first carrier set use two antenna ports to transmit and different carriers included in the second carrier set each use one antenna port to transmit, using one carrier included in the first carrier set as a switched-from carrier involved in the switching, and using two carriers included in the second carrier set as switched-to carriers involved in the switching.

In this embodiment, the first carrier set is a carrier set before switching, and the second carrier set is a carrier set after switching, that is, the embodiment switches from one carrier using two antenna ports to two carriers using one antenna port, the one carrier using two antenna ports is used as the switched-from carrier, and the two carriers using one antenna port are used as the switched-to carriers for switching.

For example, if the second carrier set includes the first carrier in the first band and the second carrier in the second band, the first carrier set includes the third carrier in the third band, and the network-side dynamic scheduling signaling or the higher-layer signaling configures the third carrier to transmit by using two antenna ports, that is, the third carrier occupies two transmission channels to transmit; and the first carrier and the second carrier each use one antenna port to transmit, that is, each of the first carrier and the second carrier occupies one transmission channel to transmit. It may be determined that the terminal performs carrier switching, that is, it is necessary to switch from a carrier set (carrier 3) to a carrier set (carrier 1, carrier 2), and when carrier switching is performed, a transmission channel for carrier 3 is switched to carrier 1 and carrier 2. During the switching time duration in which the carrier 3 is switched to the carrier 1 and the carrier 2, the terminal does not transmit any data on the carrier 1, the carrier 2, or the carrier 3.

In this embodiment, when the network-side device schedules the terminal to prepare to perform 1-port transmission on the first band on the first carrier and perform 1-port transmission on the second band on the second carrier, and if the previous transmission is that 2-port transmission is performed on the third band on the third carrier, then, on the first carrier and the second carrier and the third carrier, the terminal does not want to transmit any information during SwitchingTime.

Optionally, the method further includes: indicating, to the terminal, a carrier switching location for performing switching.

Further optionally, the indicating, to the terminal, a carrier switching location for performing switching may include: determining a switching carrier pair for performing the switching, and indicating a carrier switching location for each switching carrier pair.

In this embodiment, the carrier switching location refers to which carrier performs a carrier switching process. For example, when the carrier 1 and the carrier 2 that each transmit by using 1 antenna port are switched to the carrier 3 that transmit by using the 2 antenna ports, the switching process for switching from the carrier 1 to the carrier 3 may be performed on the carrier 1 or the carrier 2, or may be performed on the carrier 3. Using switching from carrier 1 to carrier 3 as an example: if the data gap GAP between carrier 1 and carrier 3 is less than the switching time duration of switching from carrier 1 to carrier 3, then when the switching process is performed on carrier 1, it is necessary to break part of data transmission on carrier 1, and when the switching process is performed on carrier 3, it is necessary to break part of data transmission on carrier 3.

In this embodiment, if the data gap of the two carriers performing the switching is greater than the time duration of carrier switching, then whether the carrier switching location is located at the switched-from carrier or the switched-to carrier does not affect data transmission. If the data gap of the two carriers performing the switching is less than the time duration of carrier switching, then the carrier switching location may affect the data transmission of the carrier where the carrier switching location is located.

Optionally, the indicating, to the terminal, a carrier switching location for performing switching includes:
in the case that the data gap of the two carriers involved in the switching is less than the time duration of carrier switching;
if the switched-from carrier is two carriers that each use one antenna port to transmit, the switched-to carrier is one carrier that uses two antenna ports to transmit, and indicating to the terminal that when carrier switching is performed, transmission data on a transmission channel of the switched-from carrier is broken; or when the switched-from carrier is switched to the switched-to carrier, the transmission data of the target transmission channel on the switched-to carrier is broken; and the target transmission channel is a transmission channel corresponding to the switched-from carrier after the switched-from carrier is switched to the switched-to carrier;
   or,
if the switched-from carrier is one carrier that uses two antenna ports to transmit, the switched-to carrier is two carriers that each use one antenna port to transmit, then indicating to the terminal that when carrier switching is performed, data transmission on a target transmission channel of the switched-from carrier is broken; or data transmission of the transmission channel of the switched-to carrier is broken, wherein the target transmission channel is a transmission channel, on the switched-from carrier, that needs to be switched onto the switched-to carrier.

Optionally, the indicating, to the terminal, a carrier switching location for performing switching includes one of the following:
manner 1: indicating the carrier switching location based on a first parameter of the one or more carriers involved in the switching; the first parameter may be a carrier parameter configured by the network side device for each carrier. In this embodiment, the specific switching location is indicated by using the first parameter;
manner 2: transmitting the configuration indication signaling to the terminal, the configuration indication signaling indicates the carrier switching location; the configuration indication signaling is, for example, higher layer signaling, and the network side device indicates a carrier switching location by using higher layer signaling.

Optionally, for manner 1, the indicating the carrier switching location based on the first parameter of the one or more carriers involved in the switching includes one of the following:
1) if the first parameter of the carrier that uses the two antenna ports to transmit in the one or more carriers involved in the switching is the first value, the first value is used to indicate that the carrier switching location is the carrier that uses the two antenna ports to transmit. The first value is, for example, "TRUE", that is, when a carrier parameter of a carrier that uses two antenna ports to transmit is configured as "TRUE", it is considered that carrier switching is performed on a carrier that transmits on the two antenna ports; and when a carrier parameter of a carrier that uses two antenna ports to transmit is configured as "FALSE", it is considered that carrier switching is not performed on a carrier that transmits on the two antenna ports;
2) if the first parameter of the carrier that uses one antenna port to transmit in the one or more carriers involved in the switching is the first value (which may be that the first parameter of any one of the two carriers is the first value), the first value is used to indicate that the carrier switching location is the carrier that uses the one antenna port to transmit. The first value is, for example, "TRUE", that is, in two carriers that use one antenna port to transmit, when a carrier parameter of any carrier is configured as "TRUE", it is considered that carrier switching is performed on a carrier that transmits on the one antenna port; and when carrier parameters of all carriers of two carriers that use one antenna port to transmit are configured as "FALSE", it is considered that carrier switching is not performed on a carrier that transmits on the one antenna port;
3) if the first parameter of the carrier that uses one antenna port to transmit in the one or more carriers involved in the switching is the second value (the first parameter of any one of the two carriers is the second value), determining that the carrier switching location is the carrier that uses the two antenna ports to transmit. The second value is, for example, "FALSE", that is, in two carriers that use one antenna port to transmit, when a carrier parameter of any carrier is configured as "FALSE", it is considered that carrier switching is not performed on a carrier that transmits on the one antenna port; and when carrier parameters of all carriers of two carriers that use one antenna port to transmit are configured as "TRUE", it is considered that carrier switching is performed on a carrier that transmits on the one antenna port.

The first parameter may be "uplinkTxSwitchingPeriodLocation", and in this embodiment, a carrier switching location is determined based on an uplinkTxSwitchingPeriodLocation indication of 2TX; or a carrier switching location may be determined based on an uplinkTxSwitchingPeriodLocation indication of 1TX.

In an example in which the carrier switching location is determined based on the uplinkTxSwitchingPeriodLocation indication of the carrier of the 2TX, if the parameter uplinkTxSwitchingPeriodLocation of the carrier transmitting using the 2 ports is configured as TRUE, then the carrier switching location is the carrier that transmits using the 2 ports, otherwise, the carrier switching location is the carrier that transmits using the 1 port, and in this case, the configuration parameter condition of the carrier transmitting using the 1 port may not be considered.

Optionally, for the manner 2, the configuration indication signaling indicates one of the following:
a) the carrier switching location is a carrier that uses one antenna port to transmit;
b) the carrier switching location is a carrier that transmits by using two antenna ports;
c) an indication value corresponding to the carrier that transmits using two antenna ports.

In this embodiment, for the above a) and b), the network side device directly indicates, by using the configuration indication signaling, whether the carrier switching location is a carrier that transmits using the 1 antenna port or a carrier that transmits using the 2 antenna ports.

For the above c), the network side device configures, in the configuration indication signaling, an indication value corresponding to a carrier that uses two antenna ports to transmit, wherein the indication value may be a Boolean indication value. In this embodiment, when the Boolean type indicates the switching location, the Boolean indication value corresponding to the carrier that transmits by using two antenna ports may be configured, for example: Uplink transmission switching configuration (UplinkTxSwitching) { Switching location (uplinkTxSwitchingPeriodLocation) BOOLEAN, Switching location 2 (uplinkTxSwitchingPeriodLocation2) BOOLEAN, Configure a carrier to which a cell belongs (uplinkTxSwitchingCarrier-r18) ENUMERATED {carrier1, carrier2, carrie3, carrier4} }

In the foregoing configuration information, the switching location 2 is configuration information newly added to indicate a Boolean indication value corresponding to a carrier that uses two antenna ports to transmit. For example, a carrier switching scenario of the foregoing switching configuration 2 (uplinkTxSwitchingPeriodLocation2) of the Boolean type is: switching between a first carrier in a first band that uses two antenna ports to transmit, and a second carrier in a second band and a third carrier in a third band that use one antenna port to transmit. Other switching scenarios may use the indication information of a Boolean-type switching location (uplinkTxSwitchingPeriodLocation).

The configuration information of the switching location 2 of the Boolean type may be set to 0 or 1, for example, the configuration 1 is switching in the local cell, and the configuration 0 is not switching in the local cell.

Further, the indicating the carrier switching location by the configuration indication signaling includes: if the indication value corresponding to the carrier that uses the two antenna ports to transmit is the second value, the carrier switching location is the carrier that uses the two antenna ports to transmit. The second value may be set according to requirements, and is configured to indicate that the carrier switching location is a carrier that uses two antenna ports to transmit, for example, the second value may be set to 1, or may be set to TRUE.

In an optional embodiment, the method further includes: determining a switching start time at which the terminal performs the switching. Since the number of antenna ports used by the carrier before switching is different from the number of antenna ports used by the carrier after the switching, the switching start time of the transmission channel on each carrier needs to be determined when carrier switching is performed.

Optionally, determining the switching start time at which the terminal performs the switching includes one of the following:
(1) determining the switching start time of each carrier, in one or more carriers involved in the switching, that transmits by using one antenna port.

In this embodiment, for each carrier that uses one antenna port to transmit, the respective switching start time is determined, for example, the terminal switches from c1 using two antenna ports to c2 and c3 using one antenna port, and the terminal may determine the switching start time of switching from c1 to c2 and the switching start time of switching from c1 to c3, respectively. For another example, the terminal switches from c2 and c3 using one antenna port to c1 using two antenna ports, and the terminal may determine the switching start time of c2 and c3, respectively.

(2) determining, based on the earliest switching time instant, the switching start time of all carriers that use one antenna port to transmit in the one or more carriers involved in the switching.

In this embodiment, the terminal determines the common switching start time for all switching carriers, and determines the common switching start time as the earliest switching start time of all carriers. For example, the terminal switches from c1 using two antenna ports to c2 and c3 using one antenna port, and the terminal may first determine the switching start time T1 of switching from c1 to c2 and the switching start time T2 of switching from c1 to c3, and if T1 is earlier than T2, it may be determined that the switching start time of switching from c1 to c2 and c3 is T1.

Optionally, not receiving data on the one or more carriers involved in the switching by the network side device in the carrier switching time includes:
in a case that a switched-from carrier in the one or more carriers involved in the switching uses two antenna ports to transmit, determining a first antenna port with an earlier switching start time among the two antenna ports according to precoding matrix indicator (PMI) indication information of the antenna ports; and within the switching time duration of the first antenna port, not receiving data on a transmission channel corresponding to the first antenna port by the network side device.

In this embodiment, that the network side device indicates that the two antenna ports are used to transmit information is implemented by using the precoding matrix indication. When the switching start times of the two transmission channels are different, the terminal may determine, based on the precoding matrix information, a transmission channel (that is, an antenna port) that starts to switch first, and when the switching transmission channel which starts the switching first is switched, data may not be transmitted only on the transmission channel, and the other transmission channel may continue to transmit. For example, c1 that transmits by using two antenna ports (including the antenna port A and the antenna port B) is switched to c2 and c3 that each uses one antenna port to transmit, and if the switching start time of the antenna port A is earlier than the switching start time of the antenna port B, then when the antenna port A is switched, the terminal does not transmit on the transmission channel A corresponding to the antenna port A, data may be continuously transmitted on the transmission channel B corresponding to the antenna port B, so that even if one antenna port is switched, data transmission of another antenna port on the carrier is not affected.

Optionally, the precoding matrix indication information indicates a weighting factor of each antenna port; and determining, based on the precoding matrix indication information of the antenna port, a first antenna port with the earlier switching start time in the two antenna ports includes: determining an antenna port with the weighting factor of a zero value as the first antenna port.

In this embodiment, the precoding matrix is configured to weight the transmitted signals of different antenna ports, and when the weighting factor is 0, it is equivalent to that the antenna port is 0-power transmission. The antenna port with the weighting factor of 0 value is preferentially switched, because the transmit power on the antenna port is 0, even if the break will not affect the data transmission.

The present application solves the problem of how to determine a carrier switching scenario, determine a carrier switching location, and determine a time duration of carrier switching when more than two carriers are switched therebetween, thereby facilitating efficient execution of a 3-band or 4-band uplink carrier switching characteristic.

In this embodiment of the present application, a carrier that needs to be involved in switching is determined from a first carrier set that transmits before switching and a second carrier set that transmits after the switching, so that in a time duration of carrier switching, the network side device does not receive any data on one or more carriers involved in the switching, to ensure an effective implementation of multi-band carrier switching and signaling overhead may be saved. The number of antenna ports used by the carrier which transmits in the first carrier set is different from the number of antenna ports used by the carrier which transmits in the second carrier set, so as to implement switching between different numbers of transmission channels, and may be applied to a carrier switching process in 3 bands or more bands.

The above embodiments describe the carrier switching method of the present disclosure, and the following further describes the apparatus corresponding to the methods with reference to the accompanying drawings.

Specifically, as shown in FIG. 11, an embodiment of the present disclosure provides a carrier switching apparatus 1100, applied to a terminal and including:
a first determining unit 1110, configured to determine, from a first carrier set that transmits before switching and a second carrier set that transmits after the switching, one or more carriers involved in the switching, wherein a carrier included in the first carrier set is different from a carrier included in the second carrier set, and a quantity of antenna ports used by a carrier included in the first carrier set is different from a quantity of antenna ports used by a carrier included in the second carrier set; and a first processing unit 1120 configured to: during carrier switching, not transmit on the one or more carriers involved in the switching.

Optionally, the first determining unit is specifically configured to: determine, as the one or more carriers involved in the switching, two carriers that use one antenna port to transmit and one carrier that uses two antenna ports to transmit; wherein the two carriers that use one antenna port to transmit are carriers in the same carrier set.

Optionally, the first determining unit is specifically configured to: in a case that each of different carriers included in the first carrier set uses one antenna port to transmit and a carrier included in the second carrier set uses two antenna ports to transmit, use two carriers included in the first carrier set as switched-from carriers involved in the switching, and using a carrier included in the second carrier set as a switched-to carrier involved in the switching.

Optionally, the first determining unit is specifically configured to: in a case that a carriers included in the first carrier set uses two antenna ports to transmit and each of different carriers included in the second carrier set uses one antenna port to transmit, use a carrier included in the first carrier set as a switched-from carrier involved in the switching, and use two carriers included in the second carrier set as switched-to carriers involved in the switching..

Optionally, the apparatus further includes: a third determining unit, configured to determine, from the one or more carriers involved in the switching, a carrier switching location for performing the switching.

Optionally, the third determining unit is configured to perform one of the following operations: determining the carrier switching location based on a first parameter of the one or more carriers involved in the switching; determining the carrier switching location from the one or more carriers involved in the switching based on configuration indication signaling.

Optionally, the determining, by the third determining unit, the carrier switching location based on the first parameter of the one or more carriers involved in the switching includes one of the following: if the first parameter of the carrier that uses the two antenna ports to transmit in the one or more carriers involved in the switching is a first value, determining that the carrier switching location is the carrier that uses the two antenna ports to transmit; if a first parameter of the carrier that uses one antenna port to transmit in the one or more carriers involved in the switching is a first value, determining that the carrier switching location is the carrier that uses one antenna port to transmit.

Optionally, the configuration indication signaling indicates one of the following: the carrier switching location is a carrier that uses one antenna port to transmit; the carrier switching location is a carrier that uses two antenna ports to transmit; an indication value corresponding to a carrier that uses two antenna ports to transmit.

Optionally, the determining, by the third determining unit, the carrier switching location from the one or more carriers involved in the switching based on the configuration indication signaling includes: if an indication value corresponding to the carrier that uses the two antenna ports to transmit is a second value, determining that the carrier switching location is the carrier that uses the two antenna ports to transmit.

Optionally, the apparatus further includes: a fourth determining unit, configured to determine a switching start time when performing the switching.

Optionally, the fourth determining unit is configured to perform one of the following operations: determining switching start time of each carrier that uses one antenna port to transmit in the one or more carriers involved in the switching; determining, based on an earliest switching time instant, switching start time of all carriers that use one antenna port to transmit in the one or more carriers involved in the switching.

Optionally, the first processing unit is specifically configured to: in a case that a switched-from carrier in the one or more carriers involved in the switching uses two antenna ports to transmit, determine, according to precoding matrix indication information of the antenna ports, a first antenna port with earlier switching start time in the two antenna ports; and during switching time duration of the first antenna port, not transmit on a transmission channel corresponding to the first antenna port.

Optionally, the precoding matrix indication information indicates a weighting factor of each antenna port; and
determining, by the first processing unit according to the precoding matrix indication information of the antenna ports, the first antenna port with the earlier switching start time in the two antenna ports includes: determining an antenna port having a weighting factor of a zero value as the first antenna port.

It should be noted that the above-mentioned apparatus provided in the embodiments of the present disclosure can implement all method steps implemented by the above method embodiments applied to the terminal, and can achieve the same technical effect, the same parts and beneficial effects of the method embodiments and this embodiment will not be specifically described in detail.

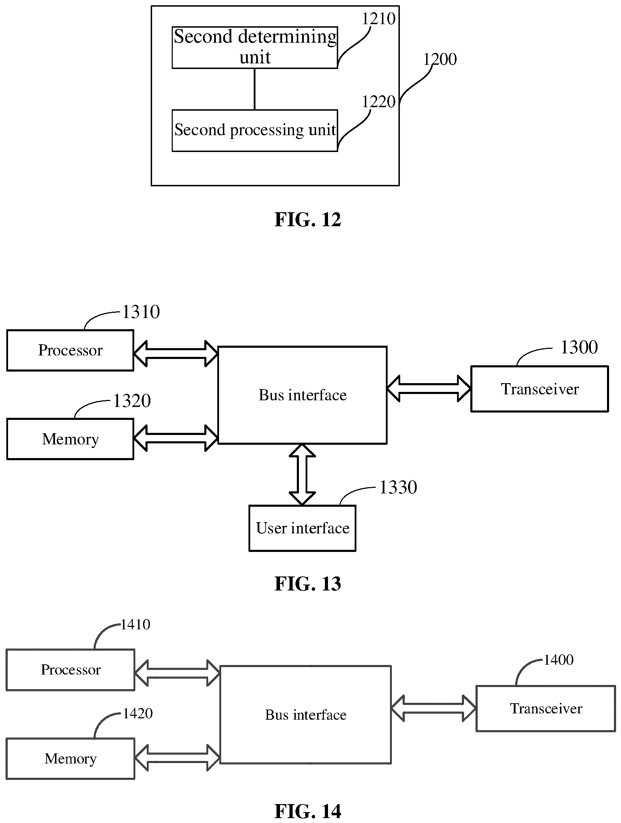

Specifically, as shown in FIG. 12, an embodiment of the present disclosure provides a carrier switching apparatus 1200, applied to a network side device. The apparatus includes:
a second determining unit 1210, configured to determine one or more carriers involved in switching in a scheduled first carrier set that transmits before the switching and a scheduled second carrier set that transmits after the switching, wherein a carrier included in the first carrier set is different from a carrier included in the second carrier set, and a quantity of antenna ports used by a carrier included in the first carrier set is different from a quantity of antenna ports used by a carrier included in the second carrier set;
a second processing unit 1220, configured to: during carrier switching, not receive data on the one or more carriers involved in the switching.

Optionally, the second determining unit is specifically configured to: determine, as the one or more carriers involved in the switching, two carriers that each use one antenna port to transmit and one carrier that uses two antenna ports to transmit; wherein the two carriers that use one antenna port to transmit are carriers in the same carrier set.

Optionally, the second determining unit is specifically configured to: in a case that each of different carriers included in the first carrier set uses one antenna port to transmit and a carrier included in the second carrier set uses two antenna ports to transmit, use two carriers included in the first carrier set as switched-from carriers involved in the switching, and use a carrier included in the second carrier set as a switched-to carrier involved in the switching.

Optionally, the second determining unit is specifically configured to: in a case that a carriers included in the first carrier set uses two antenna ports to transmit and each of different carriers included in the second carrier set uses one antenna port to transmit, use a carrier included in the first carrier set as a switched-from carrier involved in the switching, and use two carriers included in the second carrier set as switched-to carriers involved in the switching.

Optionally, the apparatus further includes: an indication unit, configured to indicate, to the terminal, a carrier switching location for performing switching.

Optionally, the indication unit is configured to one of the following: indicate the carrier switching location by using a first parameter of the one or more carriers involved in the switching; and transmit configuration indication signaling to the terminal, wherein the configuration indication signaling indicates the carrier switching location.

Optionally, the indicating, by the indication unit, the carrier switching location by using the first parameter of the one or more carriers involved in the switching includes one of the following:
configuring, in the one or more carriers involved in the switching, a first parameter of a carrier that uses two antenna ports to transmit as a first value, wherein the first value is used to indicate that the carrier switching location is a carrier that uses two antenna ports to transmit; and configuring, in the one or more carriers involved in the switching, a first parameter of a carrier that uses one antenna port to transmit as a first value, and the first value is configured to indicate that the carrier switching location is a carrier that uses one antenna port to transmit.

Optionally, the configuration indication signaling indicates one of the following: the carrier switching location is a carrier that uses one antenna port to transmit; the carrier switching location is a carrier that uses two antenna ports to transmit; an indication value corresponding to a carrier that uses two antenna ports to transmit.

Optionally, that the configuration indication signaling indicates the carrier switching location includes: if an indication value corresponding to the carrier that uses the two antenna ports to transmit is a second value, determining that the carrier switching location is the carrier that uses the two antenna ports to transmit.

Optionally, the apparatus further includes: a fifth determining unit, configured to determine switching start time of performing the switching.

Optionally, the fifth determining unit is configured to perform one of the following: determining switching start time of each carrier that uses one antenna port to transmit in the one or more carriers involved in the switching; determining, based on an earliest switching time instant, switching start time of all carriers that use one antenna port to transmit in the one or more carriers involved in the switching.

Optionally, the second processing unit is specifically configured to: in a case that a switched-from carrier in the one or more carriers involved in the switching uses two antenna ports to transmit, determine, according to precoding matrix indication information of the antenna ports, a first antenna port with earlier switching start time in the two antenna ports; and during switching time duration of the first antenna port, not receive data on a transmission channel corresponding to the first antenna port.

Optionally, the precoding matrix indication information indicates a weighting factor of each antenna port; and the determining, by the second processing unit according to precoding matrix indication information of the antenna ports, a first antenna port with earlier switching start time in the two antenna ports includes: determining an antenna port having a weighting factor of a zero value as the first antenna port.

It should be noted that, the foregoing apparatus provided in the embodiments of the present disclosure can implement all method steps implemented by the foregoing method embodiments applied to a network side device, and can achieve the same technical effect, and the same parts and beneficial effects of the embodiment as those in the method embodiments are not described herein again.

It should be noted that the division of the units in this embodiment of the present application is schematic, is merely a logical function division, and may have another division manner in actual implementation. In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solutions may be embodied in the form of a software product, and the computer software product is stored in a storage medium, and includes several instructions for causing a computer device (which may be a personal computer, a server, or a network device) or a processor to perform all or part of the steps of the methods described in the embodiments of the present application. The foregoing storage medium includes any medium that can store program code, such as a USB flash drive, a removable hard disk, a read-only memory (ROM), a random access memory (RAM), a magnetic disk, or an optical disk.

As shown in FIG. 13, an embodiment of the present disclosure further provides a terminal, including: a memory 1320, a transceiver 1300, and a processor 1310, wherein the memory 1320 is configured to store a computer program; the transceiver 1300 is configured to transmit and receive data under the control of the processor 1310; and the processor 1310 is configured to read the computer program in the memory and perform the following operations: determining, from a first carrier set that transmits before switching and a second carrier set that transmits after the switching, one or more carriers involved in the switching, wherein a carrier included in the first carrier set is different from a carrier included in the second carrier set, and a quantity of antenna ports used by a carrier included in the first carrier set is different from a quantity of antenna ports used by a carrier included in the second carrier set; and during carrier switching, not transmitting on the one or more carriers involved in the switching.

Optionally, the processor is configured to read the computer program in the memory and perform the following operations: determining, as the one or more carriers involved in the switching, two carriers that use one antenna port to transmit and one carrier that uses two antenna ports to transmit; wherein the two carriers that use one antenna port to transmit are carriers in the same carrier set.

Optionally, the processor is configured to read the computer program in the memory and perform the following operations: in a case that each of different carriers included in the first carrier set uses one antenna port to transmit and a carrier included in the second carrier set uses two antenna ports to transmit, using two carriers included in the first carrier set as switched-from carriers involved in the switching, and using a carrier included in the second carrier set as a switched-to carrier involved in the switching.

Optionally, the processor is configured to read the computer program in the memory and perform the following operations: in a case that a carriers included in the first carrier set uses two antenna ports to transmit and each of different carriers included in the second carrier set uses one antenna port to transmit, using a carrier included in the first carrier set as a switched-from carrier involved in the switching, and using two carriers included in the second carrier set as switched-to carriers involved in the switching.

Optionally, the processor is configured to read the computer program in the memory and perform the following operations: determining, from the one or more carriers involved in the switching, a carrier switching location for performing the switching.

Optionally, the processor is configured to read a computer program in the memory and perform one of the following operations: determining the carrier switching location based on a first parameter of the one or more carriers involved in the switching; determining the carrier switching location from the one or more carriers involved in the switching based on configuration indication signaling.

Optionally, the processor is configured to read a computer program in the memory and perform one of the following operations: if the first parameter of the carrier that uses the two antenna ports to transmit in the one or more carriers involved in the switching is a first value, determining that the carrier switching location is the carrier that uses the two antenna ports to transmit; if a first parameter of the carrier that uses one antenna port to transmit in the one or more carriers involved in the switching is a first value, determining that the carrier switching location is the carrier that uses one antenna port to transmit.

Optionally, the configuration indication signaling indicates one of the following: the carrier switching location is a carrier that uses one antenna port to transmit; the carrier switching location is a carrier that uses two antenna ports to transmit; an indication value corresponding to a carrier that uses two antenna ports to transmit.

Optionally, the processor is configured to read the computer program in the memory and perform the following operations: if an indication value corresponding to the carrier that uses the two antenna ports to transmit is a second value, determining that the carrier switching location is the carrier that uses the two antenna ports to transmit.

Optionally, the processor is configured to read the computer program in the memory and perform the following operations: determining switching start time of performing the switching.

Optionally, the processor is configured to read a computer program in the memory and perform one of the following operations: determining switching start time of each carrier that uses one antenna port to transmit in the one or more carriers involved in the switching; determining, based on an earliest switching time instant, switching start time of all carriers that use one antenna port to transmit in the one or more carriers involved in the switching.

Optionally, the processor is configured to read the computer program in the memory and perform the following operations: in a case that a switched-from carrier in the one or more carriers involved in the switching uses two antenna ports to transmit, determining, according to precoding matrix indication information of the antenna ports, a first antenna port with earlier switching start time in the two antenna ports; and during switching time duration of the first antenna port, not transmitting on a transmission channel corresponding to the first antenna port.

Optionally, the precoding matrix indication information indicates a weighting factor of each antenna port; and the processor is configured to read the computer program in the memory and perform the following operations: determining an antenna port having a weighting factor of a zero value as the first antenna port.

It should be noted that, in FIG. 13, the bus architecture may include any number of interconnected buses and bridges, and specifically, various circuits of one or more processors represented by the processor 1310 and a memory represented by the memory 1320 are linked together. The bus architecture may also link various other circuits, such as a peripheral device, a voltage regulator, and a power management circuit, which are well known in the art, and therefore are not further described herein. The bus interface provides an interface. The transceiver 1300 may be a plurality of elements, that is, includes a transmitter and a transceiver, and provides a unit for communicating with various other apparatuses on a transmission medium. For different user equipment, the user interface 1330 may be an interface capable of being externally connected to an internal required device, and the connected device includes but is not limited to a keypad, a display, a speaker, a microphone, a joystick, and the like. The processor 1310 is responsible for managing the bus architecture and general processing, and the memory 1320 may store data used by the processor 1310 when performing operations.

Optionally, the processor 1310 may be a CPU (Central processing unit), an Application Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory, and is configured to perform any one of the methods provided in the embodiments of the present application according to the obtained executable instruction. The processor and the memory may also be physically separated.

It should be noted that the above-mentioned terminal provided in the embodiments of the present disclosure can implement all method steps implemented by the above method embodiments applied to the terminal, and can achieve the same technical effect, which will not be specifically described in detail in this embodiment and some of the beneficial effects that are the same as those in the method embodiment.

As shown in FIG. 14, an embodiment of the present disclosure further provides a network side device, including: a memory 1420, a transceiver 1400, and a processor 1410, wherein the memory 1420 is configured to store a computer program; the transceiver 1400 is configured to transmit and receive data under the control of the processor 1410; and the processor 1410 is configured to read the computer program in the memory and perform the following operations: determining one or more carriers involved in switching in a scheduled first carrier set that transmits before the switching and a scheduled second carrier set that transmits after the switching, wherein a carrier included in the first carrier set is different from a carrier included in the second carrier set, and a quantity of antenna ports used by a carrier included in the first carrier set is different from a quantity of antenna ports used by a carrier included in the second carrier set; during carrier switching, not receiving data on the one or more carriers involved in the switching.

Optionally, the processor is configured to read the computer program in the memory and perform the following operations: determining, as the one or more carriers involved in the switching, two carriers that each use one antenna port to transmit and one carrier that uses two antenna ports to transmit; wherein the two carriers that use one antenna port to transmit are carriers in the same carrier set.

Optionally, the processor is configured to read the computer program in the memory and perform the following operations: in a case that each of different carriers included in the first carrier set uses one antenna port to transmit and a carrier included in the second carrier set uses two antenna ports to transmit, using two carriers included in the first carrier set as switched-from carriers involved in the switching, and using a carrier included in the second carrier set as a switched-to carrier involved in the switching.

Optionally, the processor is configured to read the computer program in the memory and perform the following operations: in a case that a carriers included in the first carrier set uses two antenna ports to transmit and each of different carriers included in the second carrier set uses one antenna port to transmit, using a carrier included in the first carrier set as a switched-from carrier involved in the switching, and using two carriers included in the second carrier set as switched-to carriers involved in the switching.

Optionally, the processor is configured to read the computer program in the memory and perform the following operations: indicating, to the terminal, a carrier switching location for performing switching.

Optionally, the processor is configured to read a computer program in the memory and perform one of the following operations: indicating the carrier switching location by using a first parameter of the one or more carriers involved in the switching; and transmitting configuration indication signaling to the terminal, wherein the configuration indication signaling indicates the carrier switching location.

Optionally, the processor is configured to read a computer program in the memory and perform one of the following operations:
configuring, in the one or more carriers involved in the switching, a first parameter of a carrier that uses two antenna ports to transmit as a first value, wherein the first value is used to indicate that the carrier switching location is a carrier that uses two antenna ports to transmit; and configuring, in the one or more carriers involved in the switching, a first parameter of a carrier that uses one antenna port to transmit as a first value, and the first value is configured to indicate that the carrier switching location is a carrier that uses one antenna port to transmit.

Optionally, the configuration indication signaling indicates one of the following: the carrier switching location is a carrier that uses one antenna port to transmit; the carrier switching location is a carrier that uses two antenna ports to transmit; an indication value corresponding to a carrier that uses two antenna ports to transmit.

Optionally, the processor is configured to read the computer program in the memory and perform the following operations: if an indication value corresponding to the carrier that uses the two antenna ports to transmit is a second value, determining that the carrier switching location is the carrier that uses the two antenna ports to transmit.

Optionally, the processor is configured to read the computer program in the memory and perform the following operations: determining the switching start time of performing the switching.

Optionally, the processor is configured to read a computer program in the memory and perform one of the following operations: determining switching start time of each carrier that uses one antenna port to transmit in the one or more carriers involved in the switching; determining, based on an earliest switching time instant, switching start time of all carriers that use one antenna port to transmit in the one or more carriers involved in the switching.

Optionally, the processor is configured to read the computer program in the memory and perform the following operations: in a case that a switched-from carrier in the one or more carriers involved in the switching uses two antenna ports to transmit, determining, according to precoding matrix indication information of the antenna ports, a first antenna port with earlier switching start time in the two antenna ports; and during switching time duration of the first antenna port, not receiving data on a transmission channel corresponding to the first antenna port.

Optionally, the precoding matrix indication information indicates a weighting factor of each antenna port; and the processor is configured to read the computer program in the memory and perform the following operations: determining an antenna port having a weighting factor of a zero value as the first antenna port.

In FIG. 14, the bus architecture may include any number of interconnected buses and bridges, and specifically, various circuits of one or more processors represented by the processor 1410 and a memory represented by the memory 1420 are linked together. The bus architecture may also link various other circuits, such as a peripheral device, a voltage regulator, and a power management circuit, which are well known in the art, and therefore are not further described herein. The bus interface provides an interface. The transceiver 1400 may be a plurality of elements, that is, includes a transmitter and a transceiver, and provides a unit for communicating with various other apparatuses on a transmission medium. The processor 1410 is responsible for managing the bus architecture and general processing, and the memory 1420 may store data used by the processor 1410 when performing operations.

The processor 1410 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

It should be noted that, the above-mentioned network-side device provided in the embodiments of the present disclosure can implement all method steps implemented by the above method embodiments applied to a network-side device, and can achieve the same technical effect, which will not be repeated here for the same parts and beneficial effects as the method embodiments in this embodiment.

It should be noted that, in the embodiments of the present application, the transmitting or information about the terminal generally refers to some signals/channels/data transmitted in the communication system.

In addition, an embodiment of the present disclosure further provides a computer-readable storage medium, on which a computer program is stored, wherein the program, when executed by a processor, implements the steps of the foregoing carrier switching method. In addition, the same technical effect can be achieved, and in order to avoid repetition, details are not described herein again. The readable storage medium may be any usable medium or data storage device accessible by the processor, including but not limited to a magnetic memory (for example, a floppy disk, a hard disk, a magnetic tape, a magneto-optical disk (MO), etc.), an optical memory (for example, a compact disk (CD), a high-density digital video disk (DVD), and a Blu-ray disk (BD), High Definition Versatile Disk (HVD, etc.), and semiconductor memory (e.g. Read Only Memory (ROM), Erasable Programmable Read Only Memory (EPROM), Electrically Erasable Programmable Read Only Memory (EEPROM), Non-Volatile Memory (NAND Flash), Solid State Disk (SSD), etc.

A person skilled in the art should understand that the embodiments of the present application may be provided as a method, a system, or a computer program product. Therefore, this application may use a form of hardware only embodiments, software only embodiments, or embodiments with a combination of software and hardware. Moreover, this application may use a form of a computer program product implemented on one or more computer-usable storage media (including but not limited to a disk memory, an optical memory, and the like) including computer-usable program codes.

This application is described with reference to the flowcharts and/or block diagrams of the method, the device (system), and the computer program product according to the embodiments of the present application. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general purpose computer, special purpose computer, embedded processor, or other programmable data processing apparatus to produce a machine, such that the instructions executed by the processor of the computer or other programmable data processing apparatus generate means for implementing the functions specified in one or more flows and/or block diagrams in the flowchart.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing apparatus, such that a series of operational steps are performed on the computer or other programmable apparatus to produce a computer-implemented process, such that the instructions executing on the computer or other programmable apparatus provide steps for implementing the functions specified in one or more flows of the flowchart and/or one or more blocks of the block diagram.

It should be noted that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a chip of the foregoing apparatus, or may be stored in a memory of the apparatus in a form of program code, and a certain processing element of the apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

Obviously, a person skilled in the art can make various modifications and variations to this application without departing from the spirit and scope of the present application. This application is intended to cover these modifications and variations provided that they fall within the scope of protection defined by the following claims and their equivalent technologies.

## Claims

1. A carrier switching method performed by a terminal, comprising:
determining, from a first carrier set that transmits before switching and a second carrier set that transmits after the switching, one or more carriers involved in the switching, wherein a carrier comprised in the first carrier set is different from a carrier comprised in the second carrier set, and a quantity of antenna ports used by a carrier comprised in the first carrier set is different from a quantity of antenna ports used by a carrier comprised in the second carrier set; and
during carrier switching, not transmitting on the one or more carriers involved in the switching.

2. The method according to claim 1, wherein determining, from the first carrier set that transmits before the switching and the second carrier set that transmits after the switching, the one or more carriers involved in the switching comprises:
determining, as the one or more carriers involved in the switching, two carriers that use one antenna port to transmit and one carrier that uses two antenna ports to transmit;
wherein the two carriers that use one antenna port to transmit are carriers in the same carrier set.

3. The method according to claim 1, wherein determining, from the first carrier set that transmits before the switching and the second carrier set that transmits after the switching, the one or more carriers involved in the switching comprises:
in a case that each of different carriers comprised in the first carrier set uses one antenna port to transmit and a carrier comprised in the second carrier set uses two antenna ports to transmit, using two carriers comprised in the first carrier set as switched-from carriers involved in the switching, and using a carrier comprised in the second carrier set as a switched-to carrier involved in the switching.

4. The method according to claim 1, wherein determining, from the first carrier set that transmits before the switching and the second carrier set that transmits after the switching, the one or more carriers involved in the switching comprises:
in a case that a carriers comprised in the first carrier set uses two antenna ports to transmit and each of different carriers comprised in the second carrier set uses one antenna port to transmit, using a carrier comprised in the first carrier set as a switched-from carrier involved in the switching, and using two carriers comprised in the second carrier set as switched-to carriers involved in the switching.

5. The method according to any one of claims 1 to 4, wherein the method further comprises:
determining, from the one or more carriers involved in the switching, a carrier switching location for performing the switching.

6. The method according to claim 5, wherein determining, from the one or more carriers involved in the switching, the carrier switching location for performing the switching comprises one of the following:
determining the carrier switching location based on a first parameter of the one or more carriers involved in the switching;
determining the carrier switching location from the one or more carriers involved in the switching based on configuration indication signaling.

7. The method according to claim 6, wherein determining the carrier switching location based on the first parameter of the one or more carriers involved in the switching comprises one of the following:
if the first parameter of the carrier that uses the two antenna ports to transmit in the one or more carriers involved in the switching is a first value, determining that the carrier switching location is the carrier that uses the two antenna ports to transmit;
if a first parameter of the carrier that uses one antenna port to transmit in the one or more carriers involved in the switching is a first value, determining that the carrier switching location is the carrier that uses one antenna port to transmit.

8. The method according to claim 6, wherein a first parameter of the one or more carriers involved in the switching is determined based on a first parameter configured for a single carrier, or is determined based on a first parameter configured for a carrier switching pair.

9. The method according to claim 6, wherein the configuration indication signaling indicates one of the following:
the carrier switching location is a carrier that uses one antenna port to transmit;
the carrier switching location is a carrier that uses two antenna ports to transmit;
an indication value corresponding to a carrier that uses two antenna ports to transmit.

10. The method according to claim 9, wherein determining the carrier switching location from the one or more carriers involved in the switching based on configuration indication signaling comprises:
if an indication value corresponding to the carrier that uses the two antenna ports to transmit is a second value, determining that the carrier switching location is the carrier that uses the two antenna ports to transmit.

11. The method according to any one of claims 1 to 4, wherein the method further comprises:
determining switching start time of performing the switching.

12. The method according to claim 11, wherein determining the switching start time of performing the switching comprises one of the following:
determining switching start time of each carrier that uses one antenna port to transmit in the one or more carriers involved in the switching;
determining, based on an earliest switching time instant, switching start time of all carriers that use one antenna port to transmit in the one or more carriers involved in the switching.

13. The method according to claim 1, wherein during carrier switching, not transmitting on the one or more carriers involved in the switching comprising:
in a case that a switched-from carrier in the one or more carriers involved in the switching uses two antenna ports to transmit, determining, according to precoding matrix indication information of the antenna ports, a first antenna port with earlier switching start time in the two antenna ports; and
during switching time duration of the first antenna port, not transmitting on a transmission channel corresponding to the first antenna port.

14. The method according to claim 13, wherein the precoding matrix indication information indicates a weighting factor of each antenna port;
determining, according to the precoding matrix indication information of the antenna ports, the first antenna port with the earlier switching start time in the two antenna ports comprises:
determining an antenna port having a weighting factor of a zero value as the first antenna port.

15. A carrier switching method performed by a network side device, comprising:
determining one or more carriers involved in switching in a scheduled first carrier set that transmits before the switching and a scheduled second carrier set that transmits after the switching, wherein a carrier comprised in the first carrier set is different from a carrier comprised in the second carrier set, and a quantity of antenna ports used by a carrier comprised in the first carrier set is different from a quantity of antenna ports used by a carrier comprised in the second carrier set;
during carrier switching, not receiving data on the one or more carriers involved in the switching.

16. The method according to claim 15, wherein determining the one or more carriers involved in the switching in the scheduled first carrier set that transmits before the switching and the scheduled second carrier set that transmits after the switching comprises:
in a case that each of different carriers comprised in the first carrier set uses one antenna port to transmit and a carrier comprised in the second carrier set uses two antenna ports to transmit, using two carriers comprised in the first carrier set as switched-from carriers involved in the switching, and using a carrier comprised in the second carrier set as a switched-to carrier involved in the switching.

17. The method according to claim 15, wherein determining the one or more carriers involved in the switching in the scheduled first carrier set that transmits before the switching and the scheduled second carrier set that transmits after the switching comprises:
in a case that a carriers comprised in the first carrier set uses two antenna ports to transmit and each of different carriers comprised in the second carrier set uses one antenna port to transmit, using a carrier comprised in the first carrier set as a switched-from carrier involved in the switching, and using two carriers comprised in the second carrier set as switched-to carriers involved in the switching.

18. A terminal, comprising:
a memory, a transceiver, and a processor;
wherein the memory is configured to store a computer program; the transceiver is configured to transmit and receive data under the control of the processor; and the processor is configured to read the computer program in the memory and perform the following operations:
determining, from a first carrier set that transmits before switching and a second carrier set that transmits after the switching, one or more carriers involved in the switching, wherein a carrier comprised in the first carrier set is different from a carrier comprised in the second carrier set, and a quantity of antenna ports used by a carrier comprised in the first carrier set is different from a quantity of antenna ports used by a carrier comprised in the second carrier set; and
during carrier switching, not transmitting on the one or more carriers involved in the switching.

19. The terminal according to claim 18, wherein the processor is configured to read the computer program in the memory and perform the following operations:
determining, as the one or more carriers involved in the switching, two carriers that use one antenna port to transmit and one carrier that uses two antenna ports to transmit;
wherein the two carriers that use one antenna port to transmit are carriers in the same carrier set.

20. The terminal according to claim 18, wherein the processor is configured to read the computer program in the memory and perform the following operations:
in a case that each of different carriers comprised in the first carrier set uses one antenna port to transmit and a carrier comprised in the second carrier set uses two antenna ports to transmit, using two carriers comprised in the first carrier set as switched-from carriers involved in the switching, and using a carrier comprised in the second carrier set as a switched-to carrier involved in the switching.

21. The terminal according to claim 18, wherein the processor is configured to read the computer program in the memory and perform the following operations:
in a case that a carriers comprised in the first carrier set uses two antenna ports to transmit and each of different carriers comprised in the second carrier set uses one antenna port to transmit, using a carrier comprised in the first carrier set as a switched-from carrier involved in the switching, and using two carriers comprised in the second carrier set as switched-to carriers involved in the switching.

22. The terminal according to any one of claims 18 to 21, wherein the processor is configured to read the computer program in the memory and perform the following operations:
determining, from the one or more carriers involved in the switching, a carrier switching location for performing the switching.

23. The terminal according to claim 22, wherein the processor is configured to read the computer program in the memory and perform the following operations:
determining the carrier switching location based on a first parameter of the one or more carriers involved in the switching;
determining the carrier switching location from the one or more carriers involved in the switching based on configuration indication signaling.

24. The terminal according to claim 23, wherein the processor is configured to read the computer program in the memory and perform the following operations:
if the first parameter of the carrier that uses the two antenna ports to transmit in the one or more carriers involved in the switching is a first value, determining that the carrier switching location is the carrier that uses the two antenna ports to transmit;
if a first parameter of the carrier that uses one antenna port to transmit in the one or more carriers involved in the switching is a first value, determining that the carrier switching location is the carrier that uses one antenna port to transmit.

25. The terminal according to claim 23, wherein a first parameter of the one or more carriers involved in the switching is determined based on a first parameter configured for a single carrier, or is determined based on a first parameter configured for a carrier switching pair.

26. The terminal according to claim 23, wherein the configuration indication signaling indicates one of the following:
the carrier switching location is a carrier that uses one antenna port to transmit;
the carrier switching location is a carrier that uses two antenna ports to transmit;
an indication value corresponding to a carrier that uses two antenna ports to transmit.

27. The terminal according to claim 26, wherein the processor is configured to read the computer program in the memory and perform the following operations:
if an indication value corresponding to the carrier that uses the two antenna ports to transmit is a second value, determining that the carrier switching location is the carrier that uses the two antenna ports to transmit.

28. The terminal according to any one of claims 18 to 21, wherein the processor is configured to read the computer program in the memory and perform the following operations:
determining switching start time of performing the switching.

29. The terminal according to claim 28, wherein the processor is configured to read the computer program in the memory and perform one of the following operations:
determining switching start time of each carrier that uses one antenna port to transmit in the one or more carriers involved in the switching;
determining, based on an earliest switching time instant, switching start time of all carriers that use one antenna port to transmit in the one or more carriers involved in the switching.

30. The terminal according to claim 18, wherein the processor is configured to read the computer program in the memory and perform the following operations:
in a case that a switched-from carrier in the one or more carriers involved in the switching uses two antenna ports to transmit, determining, according to precoding matrix indication information of the antenna ports, a first antenna port with earlier switching start time in the two antenna ports;
during switching time duration of the first antenna port, not transmitting on a transmission channel corresponding to the first antenna port.

31. The terminal according to claim 30, wherein the precoding matrix indication information indicates a weighting factor of each antenna port;
the processor is configured to read the computer program in the memory and perform the following operations:
determining an antenna port having a weighting factor of a zero value as the first antenna port.

32. A network side device, comprising:
a memory, a transceiver, and a processor;
wherein the memory is configured to store a computer program; the transceiver is configured to transmit and receive data under the control of the processor; and the processor is configured to read the computer program in the memory and perform the following operations:
determining one or more carriers involved in switching in a scheduled first carrier set that transmits before the switching and a scheduled second carrier set that transmits after the switching, wherein a carrier comprised in the first carrier set is different from a carrier comprised in the second carrier set, and a quantity of antenna ports used by a carrier comprised in the first carrier set is different from a quantity of antenna ports used by a carrier comprised in the second carrier set;
during carrier switching, not receiving data on the one or more carriers involved in the switching.

33. A carrier switching apparatus, comprising:
a first determining unit, configured to determine, from a first carrier set that transmits before switching and a second carrier set that transmits after the switching, one or more carriers involved in the switching, wherein a carrier comprised in the first carrier set is different from a carrier comprised in the second carrier set, and a quantity of antenna ports used by a carrier comprised in the first carrier set is different from a quantity of antenna ports used by a carrier comprised in the second carrier set; and
a first processing unit configured to during carrier switching, not transmit on the one or more carriers involved in the switching.

34. A carrier switching apparatus, comprising:
a second determining unit, configured to determine one or more carriers involved in switching in a scheduled first carrier set that transmits before the switching and a scheduled second carrier set that transmits after the switching, wherein a carrier comprised in the first carrier set is different from a carrier comprised in the second carrier set, and a quantity of antenna ports used by a carrier comprised in the first carrier set is different from a quantity of antenna ports used by a carrier comprised in the second carrier set;
a second processing unit, configured to during carrier switching, not receive data on the one or more carriers involved in the switching.

35. A computer-readable storage medium having a computer program stored thereon, wherein when the computer program is executed by a processor, the processor implements steps of the carrier switching method according to any one of claims 1 to 14, or implementing the steps of the carrier switching method according to any one of claims 15 to 17.
